# EUROPEAN PATENT APPLICATION

(11) **EP 4 651 567 A1**
(43) Date of publication of application: **19.11.2025**
(21) Application number: 23915746.4
(22) Date of filing: 06.12.2023
(51) Int. Cl.: H04W 48/16

(54) **CHANNEL ACCESS METHOD AND APPARATUS, AND COMPUTER-READABLE STORAGE MEDIUM**

(30) Priority: 14.01.2023 CN 202310225189; 20.04.2023 CN 202310450842
(71) Applicant: Huawei Technologies Co., Ltd., Shenzhen, Guangdong 518129 (CN)
(72) Inventor: WEI, Xiuhong, Shenzhen, Guangdong 518129 (CN); WANG, Bichai, Shenzhen, Guangdong 518129 (CN); LI, Xueru, Shenzhen, Guangdong 518129 (CN)
(74) Representative: Körber, Martin Hans
(86) International application number: PCT/CN2023/136815
(87) International publication number: WO 2024/148988

(57) **Abstract**

This application provides a channel access method, an apparatus, and a computer-readable storage medium. A first terminal device communicates with a second terminal device, and the second terminal device uses a coherent receiver. The channel access method is applied to the first terminal device, and includes: performing CCA based on a first threshold and/or a second threshold, to determine whether a channel is idle; and if the channel is idle, sending data to the second terminal device. When a terminal device using a non-coherent receiver is receiving data, the CCA is performed based on the first threshold. When no terminal device using a non-coherent receiver is receiving data, the CCA is performed based on the second threshold. The first threshold is less than the second threshold.

## Description

This application claims priorities to Chinese Patent Application No. 202310225189.3, filed with the China National Intellectual Property Administration on January 14, 2023 and entitled "UWB CHANNEL ACCESS METHOD AND APPARATUS", and to Chinese Patent Application No. 202310450842.6, filed with the China National Intellectual Property Administration on April 20, 2023 and entitled "CHANNEL ACCESS METHOD, APPARATUS, AND COMPUTER-READABLE STORAGE MEDIUM", both of which are incorporated herein by reference in their entireties.

### TECHNICAL FIELD

This application relates to the field of communication technologies, and in particular, to a channel access method, an apparatus, and a computer-readable storage medium.

### BACKGROUND

An ultra-wideband (ultra-wideband, UWB) technology is a wireless carrier communication technology in which a terminal device may send a nanosecond-level short pulse to implement data transmission or high-precision positioning. This has features such as a high data transmission rate, insensitivity to channel fading, low power consumption, and a low interception rate.

In the UWB technology, before sending data, a sending device performs clear channel assessment (clear channel accessment, CCA) detection by using a channel access algorithm and a specified CCA threshold, to determine whether a channel is idle. If the channel is busy in the CCA detection, the sending device may randomly wait for a period of time to avoid a collision. If the channel is idle in the CCA detection, the sending device sends data to a receiving device. The receiving device may use a coherent receiver or a non-coherent receiver. When the receiving device uses different receiving manners, due to different anti-interference performance, different requirements may be imposed on CCA thresholds used for the sending device to perform CCA detection. CCA thresholds respectively corresponding to the coherent receiver and the non-coherent receiver may be the same or different.

However, in a scenario in which a plurality of pairs of devices communicate with each other when the coherent receiver and the non-coherent receiver coexist, performance of the coherent receiver and performance of the non-coherent receiver cannot be well balanced, resulting in poor performance of a UWB system.

### SUMMARY

This application provides a channel access method, an apparatus, and a computer-readable storage medium, so that receiving performance of a non-coherent receiver and a capacity of a communication system are considered, and system performance is improved.

According to a first aspect, this application provides a channel access method, applied to a first terminal device, where the first terminal device communicates with a second terminal device, the second terminal device uses a coherent receiver, and the method includes: performing CCA based on a first threshold and/or a second threshold, to determine whether a channel is idle, where when a terminal device using a non-coherent receiver is receiving data, the CCA is performed based on the first threshold, or when no terminal device using a non-coherent receiver is receiving data, the CCA is performed based on the second threshold; and the first threshold is less than the second threshold; and if it is determined that the channel is idle, sending data to the second terminal device.

In this manner, the channel access method is applied to a process in which a sending device corresponding to a receiving device using a coherent receiver performs CCA detection. Two CCA thresholds are set. Currently, if a receiving device using a non-coherent receiver is receiving data, the first terminal device performs the CCA detection based on the first threshold with a relatively small value, and can access the channel only when interference is relatively weak, to avoid impact of accessing the channel by the first terminal device on receiving performance of the non-coherent receiver that is receiving the data. Currently, if no receiving device using a non-coherent receiver is receiving data, the first terminal device performs the CCA detection based on the second threshold with a relatively large value, to increase a probability that the first terminal device successfully accesses the channel, so that a system capacity is increased. The receiving performance of the non-coherent receiver and the capacity of a communication system are considered, and system performance of the communication system is improved.

In a possible design, whether a terminal device using a non-coherent receiver is receiving data is determined in the following manner: obtaining first signal energy in first duration based on a first preamble symbol, where the first preamble symbol indicates that a terminal device receives data by using a non-coherent receiver; and if the first signal energy is greater than a third threshold, determining that a terminal device using a non-coherent receiver is receiving data; or if the first signal energy is less than or equal to a third threshold, determining that no terminal device using a non-coherent receiver is receiving data.

In this manner, the first preamble symbol indicates that the terminal device receives the data by using the non-coherent receiver. If a receiving device using a non-coherent receiver is receiving data, a signal received by the first terminal device in the first duration includes a first preamble symbol. If no receiving device using a non-coherent receiver is receiving data, a signal received by the first terminal device in the first duration does not include a first preamble symbol. The first terminal device obtains the first signal energy based on the first preamble symbol, and may determine, based on the first signal energy and the preset third threshold, whether a receiving device using a non-coherent receiver is receiving data.

In a possible design, performing the CCA based on the first threshold and/or the second threshold includes: obtaining second signal energy by using an energy detection-based CCA algorithm; if the second signal energy is greater than or equal to a first threshold corresponding to the energy detection-based CCA algorithm, and the second signal energy is less than or equal to a second threshold corresponding to the energy detection-based CCA algorithm, obtaining third signal energy in first CCA duration by using a preamble symbol detection-based CCA algorithm performed based on a first preamble symbol, where the first preamble symbol indicates that a terminal device receives data by using a non-coherent receiver; and if the third signal energy is greater than a first threshold corresponding to the preamble symbol detection-based CCA algorithm, determining that the channel is busy; or if the third signal energy is less than or equal to a first threshold corresponding to the preamble symbol detection-based CCA algorithm, determining that the channel is idle.

In this manner, the CCA is first performed by using the energy detection-based CCA algorithm, and a status of an idle channel with relatively weak interference and a status of a busy channel with relatively strong interference are determined based on the first threshold and the second threshold that correspond to the energy detection-based CCA algorithm. The energy detection-based CCA algorithm is simple to implement and has low computing complexity. When whether the channel is idle cannot be determined by using the energy detection-based CCA algorithm, the dedicated preamble symbol detection-based CCA algorithm performed based on the first preamble symbol continues to be used, and whether a terminal device using a non-coherent receiver is receiving data and whether the channel is idle are determined based on the first threshold corresponding to the preamble symbol detection-based CCA algorithm performed based on the first preamble symbol. If a terminal device using a non-coherent receiver is receiving data, it is determined that the channel is busy, and the first terminal device cannot access the channel to send the data. This avoids impact on the non-coherent receiver that is receiving the data. If no terminal device using a non-coherent receiver is receiving data, it is determined that the channel is idle, and the first terminal device accesses the channel to send the data. This increases the system capacity.

In a possible design, the method further includes: if the second signal energy is less than the first threshold corresponding to the energy detection-based CCA algorithm, determining that the channel is idle; or if the second signal energy is greater than the second threshold corresponding to the energy detection-based CCA algorithm, determining that the channel is busy.

In this manner, the energy detection-based CCA algorithm corresponds to the first threshold and the second threshold. The status of the idle channel with relatively weak interference is determined based on the first threshold corresponding to the energy detection-based CCA algorithm. The status of the busy channel with relatively strong interference is determined based on the second threshold corresponding to the energy detection-based CCA algorithm. The two CCA thresholds are set to improve accuracy of determining whether the channel is idle or busy.

In a possible design, performing the CCA based on the first threshold and/or the second threshold includes: obtaining third signal energy in first CCA duration by using a preamble symbol detection-based CCA algorithm performed based on a first preamble symbol, where the first preamble symbol indicates that a terminal device receives data by using a non-coherent receiver; and if the third signal energy is greater than a first threshold corresponding to the preamble symbol detection-based CCA algorithm, determining that the channel is busy.

In this manner, the CCA is performed by using the dedicated preamble symbol detection-based CCA algorithm performed based on the first preamble symbol, to determine whether a terminal device using a non-coherent receiver is receiving data and whether the channel is busy. This improves efficiency of identifying that the non-coherent receiver is receiving data and performing the CCA detection.

In a possible design, if the third signal energy is less than or equal to the first threshold corresponding to the preamble symbol detection-based CCA algorithm, the method further includes: obtaining second signal energy by using an energy detection-based CCA algorithm; and if the second signal energy is greater than a second threshold corresponding to the energy detection-based CCA algorithm, determining that the channel is busy; or if the second signal energy is less than or equal to a second threshold corresponding to an energy detection-based CCA algorithm, determining that the channel is idle.

In this manner, if the CCA is performed by using the dedicated preamble symbol detection-based CCA algorithm performed based on the first preamble symbol, and when it is determined that no non-coherent device needs to be avoided, the CCA continues to be performed by using the energy detection-based CCA algorithm, to determine whether a coherent receiver needs to be avoided. In a scenario in which a coherent receiver and a non-coherent receiver coexist, receiving performance of the non-coherent receiver and the capacity of the communication system are considered, and the system performance is improved.

In a possible design, if the third signal energy is less than or equal to the first threshold corresponding to the preamble symbol detection-based CCA algorithm, the method further includes: obtaining fourth signal energy in second CCA duration by using a preamble symbol detection-based CCA algorithm performed based on a second preamble symbol, where the second preamble symbol indicates that a terminal device receives data by using a coherent receiver; and if the fourth signal energy is greater than a second threshold corresponding to the preamble symbol detection-based CCA algorithm, determining that the channel is busy; or if the fourth signal energy is less than or equal to a second threshold corresponding to the preamble symbol detection-based CCA algorithm, determining that the channel is idle.

In this manner, if the CCA is performed by using the dedicated preamble symbol detection-based CCA algorithm performed based on the first preamble symbol, and when it is determined that no non-coherent device needs to be avoided, the CCA continues to be performed by using the dedicated preamble symbol detection-based CCA algorithm performed based on the second preamble symbol, to determine whether a coherent receiver needs to be avoided. In a scenario in which a coherent receiver and a non-coherent receiver coexist, receiving performance of the non-coherent receiver and the capacity of the communication system are considered, and the system performance is improved.

In a possible design, the first threshold corresponding to the energy detection-based CCA algorithm and the first threshold corresponding to the preamble symbol detection-based CCA algorithm have different values.

In this manner, because the implementation of obtaining the second signal energy by using the energy detection-based CCA algorithm is different from the implementation of obtaining the third signal energy or the fourth signal energy by using the preamble symbol detection-based CCA algorithm, different CCA thresholds may be separately set.

In a possible design, a first frame structure includes a physical header and physical layer data, M first preamble symbols are periodically inserted into the physical header and the physical layer data based on a time interval T1, M is a positive integer, and the first frame structure is sent by a terminal device that sends data and that corresponds to a terminal device receiving data by using a non-coherent receiver.

In this manner, the physical header and the physical layer data in the first frame structure include the first preamble symbol, so that another sending device that is to send data can determine, based on the first preamble symbol, that a terminal device using a non-coherent receiver is receiving data. This helps the another sending device that is to send the data select a corresponding CCA threshold to perform CCA.

In a possible design, the first frame structure further includes a synchronization field, the synchronization field includes a third preamble symbol, the third preamble symbol is used for synchronization, N first preamble symbols are further periodically inserted into the synchronization field based on a time interval T2, and N is a positive integer.

In this manner, the synchronization field in the first frame structure includes the first preamble symbol, so that a success rate of detecting a first preamble symbol is improved, and a success rate of determining that a terminal device using a non-coherent receiver is receiving data is improved.

In a possible design, the first frame structure further includes a start-of-frame delimiter field. The start-of-frame delimiter field is spread by using the third preamble symbol, and the N first preamble symbols are further periodically inserted into the start-of-frame delimiter field based on the time interval T2; or the start-of-frame delimiter field is generated based on the first preamble symbol and a spreading code.

In this manner, the start-of-frame delimiter field in the first frame structure includes the first preamble symbol, so that the success rate of detecting the first preamble symbol is improved, and the success rate of determining that a terminal device using a non-coherent receiver is receiving data is improved.

In a possible design, the first CCA duration is T5+j*T0, j is a positive integer, 1≤j≤max(M, N), max() indicates taking a maximum value, T0 is a time length of the first preamble symbol, and T5 is a largest value in the time interval T1 and a plurality of preset time intervals T2.

In this manner, the physical header, the physical layer data, the synchronization field, and the start-of-frame delimiter field in the first frame structure include the first preamble symbol. The first terminal device needs to obtain a received signal of a time length of at least T5+T0, and detect at least one first preamble symbol, to determine that a terminal device using a non-coherent receiver is receiving data.

In a possible design, the first CCA duration is at least the time interval T1+j*T0, j is a positive integer, 1≤j≤M, and T0 is a time length of the first preamble symbol.

In this manner, the physical header and the physical layer data in the first frame structure include the first preamble symbol, the synchronization field does not include a first preamble symbol, and the start-of-frame delimiter field may include a first preamble symbol or may not include a first preamble symbol. The first terminal device needs to obtain a received signal of a time length of at least T1+T0, and detect at least one first preamble symbol, to determine that a terminal device using a non-coherent receiver is receiving data.

In a possible design, the obtaining third signal energy in first CCA duration by using a preamble symbol detection-based CCA algorithm performed based on a first preamble symbol includes: performing sliding correlation between the first preamble symbol and a received signal in the first CCA duration, to obtain first correlation energy, where the first CCA duration is the time interval T1+j*T0, j is a positive integer, 1≤j≤M, and T0 is the time length of the first preamble symbol; and if the first correlation energy is greater than the first threshold corresponding to the preamble symbol detection-based CCA algorithm, determining the first correlation energy as the third signal energy.

In this manner, the physical header and the physical layer data in the first frame structure include the first preamble symbol, the synchronization field does not include a first preamble symbol, and the start-of-frame delimiter field may include a first preamble symbol or may not include a first preamble symbol. The first terminal device first obtains a received signal of the time length "T1+j*T0", and if the first correlation energy is greater than the first threshold corresponding to the preamble symbol detection-based CCA algorithm, determines the first correlation energy as the third signal energy. If the first correlation energy is less than or equal to the first threshold corresponding to the preamble symbol detection-based CCA algorithm, the first CCA duration may be prolonged to continue to perform CCA detection, to improve accuracy of detecting the first preamble symbol.

In a possible design, the obtaining third signal energy in first CCA duration by using a preamble symbol detection-based CCA algorithm performed based on a first preamble symbol further includes: if the first correlation energy is less than or equal to the first threshold corresponding to the preamble symbol detection-based CCA algorithm, performing sliding correlation between the first preamble symbol and a received signal in the first CCA duration, to obtain second correlation energy, where the first CCA duration is the time interval T1+j*T0+T4, T4 is a largest value in a plurality of preset synchronization header time lengths; and determining the second correlation energy as the fourth signal energy.

In this manner, the physical header and the physical layer data in the first frame structure include the first preamble symbol, the synchronization field does not include a first preamble symbol, and the start-of-frame delimiter field does not include a first preamble symbol. If the first correlation energy is less than or equal to the first threshold corresponding to the preamble symbol detection-based CCA algorithm, the first CCA duration is prolonged by T4 to continue to perform CCA detection, to improve the accuracy of detecting the first preamble symbol.

In a possible design, the obtaining third signal energy in first CCA duration by using a preamble symbol detection-based CCA algorithm performed based on a first preamble symbol further includes: if the first correlation energy is less than or equal to the first threshold corresponding to the preamble symbol detection-based CCA algorithm, performing sliding correlation between the first preamble symbol and a received signal in the first CCA duration, to obtain third correlation energy, where the first CCA duration is the time interval T1+j*T0+T3, T3 is a largest value in a plurality of preset synchronization field time lengths; and determining the third correlation energy as the fourth signal energy.

In this manner, the physical header and the physical layer data in the first frame structure include the first preamble symbol, the synchronization field does not include a first preamble symbol, and the start-of-frame delimiter field includes a first preamble symbol. If the first correlation energy is less than or equal to the first threshold corresponding to the preamble symbol detection-based CCA algorithm, the first CCA duration is prolonged by T4 to continue to perform CCA detection, to improve accuracy of detecting the first preamble symbol.

In a possible design, a cross-correlation value between a preamble code sequence used for the first preamble symbol and a preamble code sequence used for a third preamble symbol is less than a preset value, and the third preamble symbol is used for synchronization.

In this manner, the first preamble symbol and the third preamble symbol have good cross-correlation feature, so that the accuracy of detecting the first preamble symbol is improved, and a synchronization function is not affected.

In a possible design, the second CCA duration is related to a time length of the second preamble symbol and a time interval at which the second preamble symbol is inserted into a second frame structure, and the second frame structure is sent by a terminal device that sends data and that corresponds to a terminal device receiving data by using a coherent receiver.

In a possible design, sending the data to the second terminal device includes: sending a second frame structure to the second terminal device, where the second frame structure includes a second preamble symbol, and the second preamble symbol indicates that the second terminal device uses the coherent receiver.

In this manner, the first terminal device determines that the channel is idle, and may send the second frame structure to the second terminal device, where the second frame structure includes the second preamble symbol. Because the second preamble symbol is used, another sending device that is to send data may determine, based on the second preamble symbol, that a terminal device using a coherent receiver is receiving data. This helps the another sending device that is to send the data select a corresponding CCA threshold to perform CCA.

In a possible design, the second frame structure includes a physical header and physical layer data, and the physical header and the physical layer data include the second preamble symbol.

In this manner, the physical header and the physical layer data in the second frame structure include the second preamble symbol, so that another sending device that is to send data can determine, based on the second preamble symbol, that a terminal device using a non-coherent receiver is receiving data. This helps the another sending device that is to send the data select a corresponding CCA threshold to perform CCA.

In a possible design, A second preamble symbols are periodically inserted into the physical header and the physical layer data based on a time interval T11, and A is a positive integer.

In a possible design, the second frame structure further includes a synchronization field and a start-of-frame delimiter field, and the synchronization field and the start-of-frame delimiter field both include a second preamble symbol.

In this manner, the synchronization field and the start-of-frame delimiter field in the second frame structure includes the second preamble symbol, so that a success rate of detecting a second preamble symbol is improved, and a success rate of determining that a terminal device using a coherent receiver is receiving data is improved.

In a possible design, the synchronization field further includes a third preamble symbol, the third preamble symbol is used for synchronization, B second preamble symbols are further periodically inserted into the synchronization field based on a time interval T12, and B is a positive integer.

In a possible design, the start-of-frame delimiter field is spread by using the third preamble symbol, and the B second preamble symbols are further periodically inserted into the start-of-frame delimiter field based on the time interval T12.

In this implementation, an existing spreading manner of the start-of-frame delimiter field is not changed, and the second preamble symbol is periodically inserted into the start-of-frame delimiter field, so that the start-of-frame delimiter field includes the second preamble symbol.

In a possible design, the time interval T12 is related to a time length of the third preamble symbol or a time length of a preamble code sequence used for the third preamble symbol.

In a possible design, the B second preamble symbols are located after an end position of a former third preamble symbol and before a start position of a latter third preamble symbol in two adjacent third preamble symbols.

In this implementation, the synchronization function is not affected because the second preamble symbol is inserted.

In a possible design, the start-of-frame delimiter field is generated based on the first preamble symbol and a spreading code.

In this implementation, the start-of-frame delimiter field is directly generated through spreading based on the second preamble symbol, and there is no need to insert a second preamble symbol. A length of the start-of-frame delimiter field remains unchanged, and a length of the second frame structure is reduced.

In a possible design, the second frame structure further includes a synchronization field and a start-of-frame delimiter field. The synchronization field includes a third preamble symbol, and the third preamble symbol is used for synchronization. The start-of-frame delimiter field is generated based on the third preamble symbol and a spreading code, or the start-of-frame delimiter field is generated based on the second preamble symbol and a spreading code.

In this implementation, the synchronization field does not include a second preamble symbol, and the start-of-frame delimiter field may include a second preamble symbol, or may not include a second preamble symbol. This avoids impact on the synchronization function.

In a possible design, a cross-correlation value between a preamble code sequence used for the second preamble symbol and a preamble code sequence used for a first preamble symbol, and a cross-correlation value between the preamble code sequence used for the second preamble symbol and a preamble code sequence used for a third preamble symbol are both less than a preset value, the first preamble symbol indicates that a terminal device uses a non-coherent receiver, and the third preamble symbol is used for synchronization.

In this manner, the first preamble symbol and the second preamble symbol have good cross-correlation feature, and the second preamble symbol and the third preamble symbol have good cross-correlation feature, so that the accuracy of detecting the second preamble symbol is improved, and the synchronization function is not affected.

In a possible design, the method further includes: receiving indication information sent by the second terminal device, where the indication information indicates whether the second terminal device uses a coherent receiver or a non-coherent receiver.

In this manner, the first terminal device may learn, by using the indication information sent by the second terminal device, that a corresponding receiving device uses a coherent receiver, so that the foregoing channel access method is performed. In this way, the receiving performance of the non-coherent receiver and the capacity of the communication system can be considered, and the system performance of the communication system is improved.

According to a second aspect, this application provides a channel access method, applied to a second terminal device, where the second terminal device communicates with a first terminal device, the second terminal device uses a coherent receiver, and the method includes: receiving a second frame structure sent by the first terminal device, where the second frame structure includes a second preamble symbol, and the second preamble symbol indicates that the second terminal device uses the coherent receiver; and determining a position and duration of the second preamble symbol in the second frame structure, and parsing the second frame structure.

In this manner, the first terminal device determines that a channel is idle, and may send the second frame structure to the second terminal device, where the second frame structure includes the second preamble symbol. Because the second preamble symbol is used, another sending device that is to send data may determine, based on the second preamble symbol, that a terminal device using a coherent receiver is receiving data. This helps the another sending device that is to send the data select a corresponding CCA threshold to perform CCA.

In a possible design, the method further includes: sending indication information to the first terminal device, where the indication information indicates whether the second terminal device uses a coherent receiver or a non-coherent receiver.

In a possible design, the second frame structure includes a physical header and physical layer data, and the physical header and the physical layer data include a second preamble symbol.

In a possible design, A second preamble symbols are periodically inserted into the physical header and the physical layer data based on a time interval T11, and A is a positive integer.

In a possible design, the second frame structure further includes a synchronization field and a start-of-frame delimiter field, and the synchronization field and the start-of-frame delimiter field both include a second preamble symbol.

In a possible design, the synchronization field further includes a third preamble symbol, the third preamble symbol is used for synchronization, B second preamble symbols are further periodically inserted into the synchronization field based on a time interval T12, and B is a positive integer.

In a possible design, the start-of-frame delimiter field is spread by using the third preamble symbol, and the B second preamble symbols are further periodically inserted into the start-of-frame delimiter field based on the time interval T12.

In a possible design, the time interval T12 is related to a time length of the third preamble symbol or a time length of a preamble code sequence used for the third preamble symbol.

In a possible design, the B second preamble symbols are located after an end position of a former third preamble symbol and before a start position of a latter third preamble symbol in two adjacent third preamble symbols.

In a possible design, the start-of-frame delimiter field is generated based on a first preamble symbol and a spreading code.

In a possible design, the second frame structure further includes a synchronization field and a start-of-frame delimiter field. The synchronization field includes a third preamble symbol, and the third preamble symbol is used for synchronization. The start-of-frame delimiter field is generated based on the third preamble symbol and a spreading code, or the start-of-frame delimiter field is generated based on the second preamble symbol and a spreading code.

In a possible design, a cross-correlation value between a preamble code sequence used for the second preamble symbol and a preamble code sequence used for a third preamble symbol is less than a preset value. The third preamble symbol is used for synchronization.

According to a third aspect, this application provides a channel access method, applied to a third terminal device, where the third terminal device communicates with a fourth terminal device, the fourth terminal device uses a non-coherent receiver, and the method includes: performing CCA to determine whether a channel is idle; and if it is determined that the channel is idle, sending a first frame structure to the fourth terminal device, where the first frame structure includes a first preamble symbol, and the first preamble symbol indicates that the fourth terminal device uses the non-coherent receiver.

In this manner, the channel access method is applied to a process in which a sending device corresponding to a receiving device using a non-coherent receiver performs CCA detection. After performing the CCA to determine that the channel is idle, the third terminal device needs to send the first frame structure. The first frame structure includes the first preamble symbol, so that another sending device that is to send data can determine, based on the first preamble symbol, that a receiving device using a non-coherent receiver in a current environment is receiving data. This helps the another sending device that is to send the data select a corresponding CCA threshold to perform CCA.

In a possible design, the method further includes: receiving indication information sent by the fourth terminal device, where the indication information indicates whether the fourth terminal device uses a coherent receiver or a non-coherent receiver.

In a possible design, the first frame structure includes a physical header and physical layer data, and the physical header and the physical layer data include the first preamble symbol.

In this manner, the physical header and the physical layer data in the first frame structure include the first preamble symbol, so that another sending device that is to send data can determine, based on the first preamble symbol, that a terminal device using a non-coherent receiver is receiving data. This helps the another sending device that is to send the data select a corresponding CCA threshold to perform CCA.

In a possible design, M first preamble symbols are periodically inserted into the physical header and the physical layer data based on a time interval T1, and M is a positive integer.

In a possible design, the first frame structure further includes a synchronization field and a start-of-frame delimiter field, and the synchronization field and the start-of-frame delimiter field both include a first preamble symbol.

In this manner, the synchronization field and the start-of-frame delimiter field in the first frame structure includes the first preamble symbol, so that a success rate of detecting a first preamble symbol is improved, and a success rate of determining that a terminal device using a non-coherent receiver is receiving data is improved.

In a possible design, the synchronization field further includes a third preamble symbol, the third preamble symbol is used for synchronization, N first preamble symbols are further periodically inserted into the synchronization field based on a time interval T2, and N is a positive integer.

In a possible design, the start-of-frame delimiter field is spread by using the third preamble symbol, and the N first preamble symbols are further periodically inserted into the start-of-frame delimiter field based on the time interval T2.

In this implementation, an existing spreading manner of the start-of-frame delimiter field is not changed, and the first preamble symbol is periodically inserted into the start-of-frame delimiter field, so that the start-of-frame delimiter field includes the first preamble symbol.

In a possible design, the time interval T2 is related to a time length of the third preamble symbol or a time length of a preamble code sequence used for the third preamble symbol.

In a possible design, the N first preamble symbols are located after an end position of a former third preamble symbol and before a start position of a latter third preamble symbol in two adjacent third preamble symbols.

In this implementation, a synchronization function is not affected because the first preamble symbol is inserted.

In a possible design, the start-of-frame delimiter field is generated based on the first preamble symbol and a spreading code.

In this implementation, the start-of-frame delimiter field is directly generated through spreading based on the first preamble symbol, and there is no need to insert a first preamble symbol. A length of the start-of-frame delimiter field remains unchanged, and a length of the first frame structure is reduced.

In a possible design, the first frame structure further includes a synchronization field and a start-of-frame delimiter field. The synchronization field includes a third preamble symbol, and the third preamble symbol is used for synchronization. The start-of-frame delimiter field is generated based on the third preamble symbol and a spreading code, or the start-of-frame delimiter field is generated based on the first preamble symbol and a spreading code.

In this implementation, the synchronization field does not include a first preamble symbol, and the start-of-frame delimiter field may include a first preamble symbol, or may not include a first preamble symbol. This avoids impact on the synchronization function.

In a possible design, a cross-correlation value between a preamble code sequence used for the first preamble symbol and a preamble code sequence used for a third preamble symbol is less than a preset value, and the third preamble symbol is used for synchronization.

According to a fourth aspect, this application provides a channel access method, applied to a fourth terminal device, where the fourth terminal device communicates with a third terminal device, the fourth terminal device uses a non-coherent receiver, and the method includes: receiving a first frame structure sent by the third terminal device, where the first frame structure includes a first preamble symbol, and the first preamble symbol indicates that the fourth terminal device uses the non-coherent receiver; and determining a position and duration of the first preamble symbol in the first frame structure, and parsing the first frame structure.

In a possible design, the method further includes: sending indication information to the third terminal device, where the indication information indicates whether the fourth terminal device uses a coherent receiver or a non-coherent receiver.

In a possible design, the first frame structure includes a physical header and physical layer data, and the physical header and the physical layer data include the first preamble symbol.

In a possible design, M first preamble symbols are periodically inserted into the physical header and the physical layer data based on a time interval T1, and M is a positive integer.

In a possible design, the first frame structure further includes a synchronization field and a start-of-frame delimiter field, and the synchronization field and the start-of-frame delimiter field both include a first preamble symbol.

In a possible design, the synchronization field further includes a third preamble symbol, the third preamble symbol is used for synchronization, N first preamble symbols are further periodically inserted into the synchronization field based on a time interval T2, and N is a positive integer.

In a possible design, the start-of-frame delimiter field is spread by using the third preamble symbol, and the N first preamble symbols are further periodically inserted into the start-of-frame delimiter field based on the time interval T2.

In a possible design, the time interval T2 is related to a time length of the third preamble symbol or a time length of a preamble code sequence used for the third preamble symbol.

In a possible design, the N first preamble symbols are located after an end position of a former third preamble symbol and before a start position of a latter third preamble symbol in two adjacent third preamble symbols.

In a possible design, the start-of-frame delimiter field is generated based on the first preamble symbol and a spreading code.

In a possible design, the first frame structure further includes a synchronization field and a start-of-frame delimiter field. The synchronization field includes a third preamble symbol, and the third preamble symbol is used for synchronization. The start-of-frame delimiter field is generated based on the third preamble symbol and a spreading code, or the start-of-frame delimiter field is generated based on the first preamble symbol and a spreading code.

In a possible design, a cross-correlation value between a preamble code sequence used for the first preamble symbol and a preamble code sequence used for a third preamble symbol is less than a preset value, and the third preamble symbol is used for synchronization.

According to a fifth aspect, an apparatus is provided, including units or means (means) configured to perform steps in any one of the foregoing aspects.

According to a sixth aspect, a communication apparatus is provided. The communication apparatus includes a processor, a memory, and a transceiver. The transceiver is configured to communicate with another device. The processor is configured to: read instructions in the memory, and enable, according to the instructions, the communication apparatus to perform the method provided in any one of the foregoing aspects.

According to a seventh aspect, a program product is provided. The program product includes a computer program, the computer program is stored in a readable storage medium, at least one processor of a device may read the computer program from the readable storage medium, and the at least one processor executes the computer program to enable the device to implement the method provided in any one of the foregoing aspects.

According to an eighth aspect, a computer-readable storage medium is provided. The computer-readable storage medium stores instructions. When the instructions are run on a computer or a processor, the method provided in any one of the foregoing aspects is implemented.

According to a ninth aspect, a chip system is provided. The chip system includes a processor, configured to perform the method provided in any one of the foregoing aspects. In a possible design, the chip system further includes a memory, configured to store program instructions and/or data. The chip system may include a chip, or may include a chip and another discrete component.

According to a tenth aspect, this application provides a communication system. The system includes a terminal device, and the terminal device is configured to implement functions of the terminal device in the method provided in any one of the foregoing aspects.

### BRIEF DESCRIPTION OF DRAWINGS

FIG. 1 is a diagram of a wireless communication system according to an embodiment of this application;
FIG. 2 is a flowchart of a channel access method in a conventional technology;
FIG. 3A and FIG. 3B are a group of diagrams of accessing a channel by a plurality of terminal devices in a conventional technology;
FIG. 4A and FIG. 4B are a group of diagrams of accessing a channel by a plurality of terminal devices according to an embodiment of this application;
FIG. 5 is a diagram of a preamble code sequence and a preamble symbol according to an embodiment of this application;
FIG. 6 is a diagram of a frame structure sent by a sending device in a conventional technology;
FIG. 7A and FIG. 7B are diagrams of a first frame structure according to an embodiment of this application;
FIG. 8 is a flowchart of a channel access method according to an embodiment of this application;
FIG. 9 is another flowchart of a channel access method according to an embodiment of this application;
FIG. 10 is still another flowchart of a channel access method according to an embodiment of this application;
FIG. 11 is still another flowchart of a channel access method according to an embodiment of this application;
FIG. 12 is still another flowchart of a channel access method according to an embodiment of this application;
FIG. 13 is a diagram of a structure of a possible communication apparatus according to an embodiment of this application; and
FIG. 14 is a diagram of a structure of a terminal device according to an embodiment of this application.

### DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

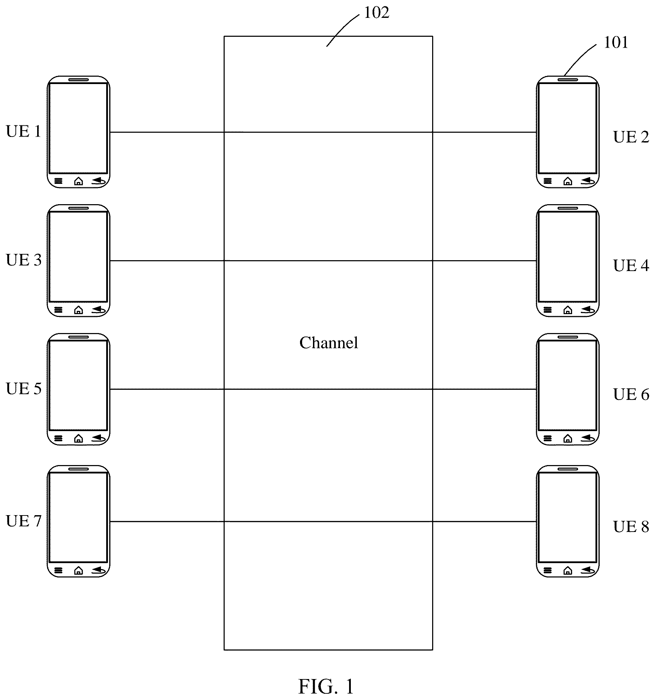

As shown in FIG. 1, a channel access method provided in this application may be applied to a wireless communication system. The wireless communication system includes a plurality of terminal devices 101, and the plurality of terminal devices 101 communicate with each other through a common channel 102. For each terminal device 101, when the terminal device 101 sends data to another terminal device, the terminal device 101 is referred to as a sending terminal device or a sending device. When the terminal device 101 receives data sent by another terminal device, the terminal device 101 is referred to as a receiving terminal device or a receiving device. Two terminal devices 101 that communicate with each other may be referred to as a pair of devices or a pair of users.

In FIG. 1, the terminal devices 101 include eight mobile phones, identified as UE 1 to UE 8. The UE 1 communicates with the UE 2, the UE 3 communicates with the UE 4, the UE 5 communicates with the UE 6, and the UE 7 communicates with the UE 8. It is assumed that currently, the UE 1 sends data to the UE 2, the UE 3 sends data to the UE 4, and the UE 5 receives data sent by the UE 6. In this case, three pairs of devices are communicating.

It should be noted that a number, a type, a name, and a number of terminal devices 101, and a number of pairs of devices that simultaneously communicate with each other in the wireless communication system are not limited in this application.

For example, the terminal device 101 may also be referred to as an electronic device, a communication device, a communication apparatus, or a device. The terminal device 101 may also be user equipment (user equipment, UE), a terminal (terminal), a terminal unit, a terminal station, a mobile station (mobile station, MS), a mobile terminal (mobile terminal), a wireless communication device, a terminal agent, or the like. The terminal device 101 may alternatively be a communication chip having a communication module, or may be a vehicle having a communication function, or an in-vehicle device (for example, an in-vehicle communication apparatus or an in-vehicle communication chip), or the like.

The terminal device 101 may be specifically a mobile phone (mobile phone), a tablet computer (pad), a wearable device, a computer with a wireless transceiver function, a virtual reality (virtual reality, VR) terminal, an augmented reality (augmented reality, AR) terminal, various in-vehicle devices, an internet of things device, or the like.

It should be noted that a type of the wireless communication system, a used communication technology, or a used communication protocol is not limited in this application. For example, the wireless communication system is a UWB system.

To reduce impact caused by multi-user interference, a sending device needs to perform a channel access algorithm when sending data, and determines, through CCA detection, whether a channel is idle. If it is determined that the channel is idle, the sending device sends the data to a corresponding receiving device; or if it is determined that the channel is busy, the sending device cannot send the data.

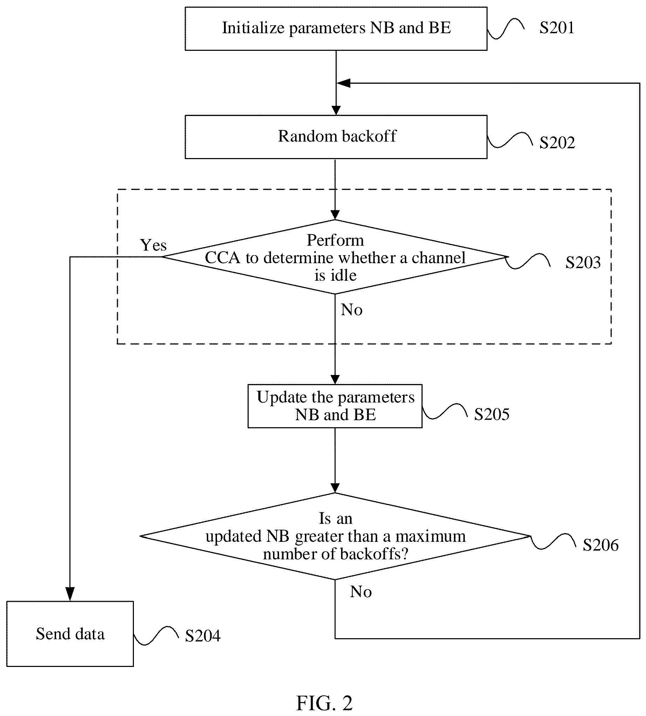

With reference to FIG. 2, the following describes an example of a channel access method of carrier sense multiple access with collision avoidance (carrier sense multiple access with collision avoidance, CSMA-CA) and a CCA detection process.

The channel access method relates to the following parameters:

### 1. Number of backoffs (number of backoffs, NB), and maximum number of backoffs (macMaxCSMABackoffs)

The NB refers to a number of times that a sending device has backed off when attempting to send data. The maximum number of backoffs limits a maximum value of the NB. The following condition needs to be met: the number of backoffs NB≤the maximum number of backoffs macMaxCSMABackoffs.

"Backoff" is also referred to as "waiting".

### 2. Backoff exponent (backoff exponent, BE), minimum backoff exponent (macMinBE), and maximum backoff exponent (macMaxBE)

The BE is related to backoff time that a sending device waits for before attempting channel assessment. The minimum backoff exponent and the maximum backoff exponent limit a value range of the BE. The following condition needs to be met: the minimum backoff exponent macMinBe≤the backoff exponent BE≤the maximum backoff exponent macMaxBE.

It should be noted that values of the minimum backoff exponent, the maximum backoff exponent, and the maximum number of backoffs are not limited in this application.

The CCA detection process relates to the following parameters:

### 1. CCA duration, signal energy, and CCA threshold

A sending device needs to detect, in specific duration, signal energy of a signal that is being transmitted on a channel, and determine, based on the signal energy and the CCA threshold, whether the channel is idle. The specific duration is referred to as the CCA duration.

As shown in FIG. 2, a channel access method is performed by the sending device, and may include the following steps.

S201: Initialize parameters NB and BE.

Before starting to perform the channel access method, the sending device needs to initialize the parameters NB and BE. The number of backoffs NB is set to 0 and the backoff exponent BE is set to a minimum backoff exponent macMinBE.

S202: Perform random backoff.

Duration of the random backoff is related to the BE. The sending device randomly selects a value from a set {0, 1, ..., 2^BE-1}, multiplies the value by a backoff time unit to obtain the duration of the backoff, and performs the backoff based on the duration of the backoff. A value of the backoff time unit is not limited in this application.

The random backoff reduces a probability that a plurality of sending devices perform CCA detection at a same moment. The sending device does not access a channel temporarily, and attempts to access the channel again after random backoff, to reduce a collision and improve a channel access success rate.

S203: Perform CCA to determine whether the channel is idle.

After the random backoff ends, the sending device performs a CCA detection process, namely, as shown in a dashed box in FIG. 2.

The sending device detects, in CCA duration, a signal that is being transmitted on the channel, to obtain signal energy. If the signal energy is less than a CCA threshold, it is considered that the channel is idle, and S204 is performed. If the signal energy is greater than a CCA threshold, it is considered that the channel is busy, and S205 and S206 are performed. If the signal energy is equal to a CCA threshold, it may be considered that the channel is idle, and S204 is performed; or it is considered that the channel is busy, and S205 and S206 are performed.

It may be understood that a larger specified CCA threshold indicates a higher probability of determining that the channel is idle, and a higher probability of accessing the channel by the sending device to send data. On the contrary, a smaller specified CCA threshold indicates a higher probability of determining that the channel is busy, and a lower probability of accessing the channel by the sending device to send data.

The CCA threshold also reflects interference signal strength tolerable by a receiving device.

If the CCA threshold is set to a relatively large value, even if another terminal device is transmitting data, signal energy obtained by the sending device during CCA detection may still be lower than the CCA threshold. In this case, it is considered that the channel is idle, and the sending device can access the channel to send data. However, channel interference is increased when the sending device sends data, in other words, interference to a receiving device corresponding to the sending device is also strong when the receiving device receives the data, and interference to another receiving device that is receiving data is also increased. In other words, a CCA threshold with a relatively large value may reflect that the receiving device can tolerate relatively strong interference. On the contrary, if the CCA threshold is set to a relatively small value, even if no other terminal device or a relatively small number of other terminal devices are transmitting data, signal energy obtained by the sending device during CCA detection may still be higher than the CCA threshold. In this case, it is considered that the channel is busy, and the sending device cannot access the channel to send data. In this case, interference to another receiving device that is receiving data is not increased, but the sending device detects that the channel is not idle for a long time. This results in a long sending delay and a low system capacity.

S204: Send data.

If the sending device determines that the channel is idle, the sending device may successfully access the channel, and send data to the corresponding receiving device.

S205: Update the parameters NB and BE.

If the sending device determines that the channel is busy, the sending device may continue to wait for a random period of time, to avoid a collision.

Specifically, the number of backoffs NB and the backoff exponent BE are updated. The sending device adds 1 to a value of the number of backoffs NB. The sending device adds 1 to a value of the backoff exponent BE, and determines whether a value exceeds a maximum backoff exponent macMaxCSMABE. If an updated backoff exponent BE is greater than the maximum backoff exponent macMaxCSMABE, the value of the backoff exponent BE is updated to the maximum backoff exponent macMaxBE.

S206: Determine whether an updated NB is greater than a maximum number of backoffs.

If the updated number of backoffs NB is greater than the maximum number of backoffs macMaxCSMABackoffs, it indicates that the sending device fails to access the channel. Optionally, after the channel access fails, the sending device may reset a channel access parameter and restart a channel access process, that is, start from S201. Alternatively, the sending device may directly send data. Alternatively, the sending device does not perform current data sending and discards data to be sent this time.

If the updated number of backoffs NB does not exceed the maximum number of backoffs macMaxCSMABackoffs, the sending device performs S202 again by using the updated backoff exponent BE, to perform a next backoff and CCA detection process.

The receiving device may use a coherent receiver or a non-coherent receiver. The coherent receiver has better receiving performance and stronger anti-interference capability than the non-coherent receiver. Based on the foregoing analysis, the CCA threshold may reflect the interference signal strength tolerable by the receiving device. Therefore, when receiving manners used by the receiving device are different, different requirements may be imposed on the CCA threshold used by the sending device corresponding to the receiving device to perform CCA detection.

In a conventional technology, in an implementation, a CCA threshold used by a sending device corresponding to a coherent receiver is greater than a CCA threshold used by a sending device corresponding to a non-coherent receiver.

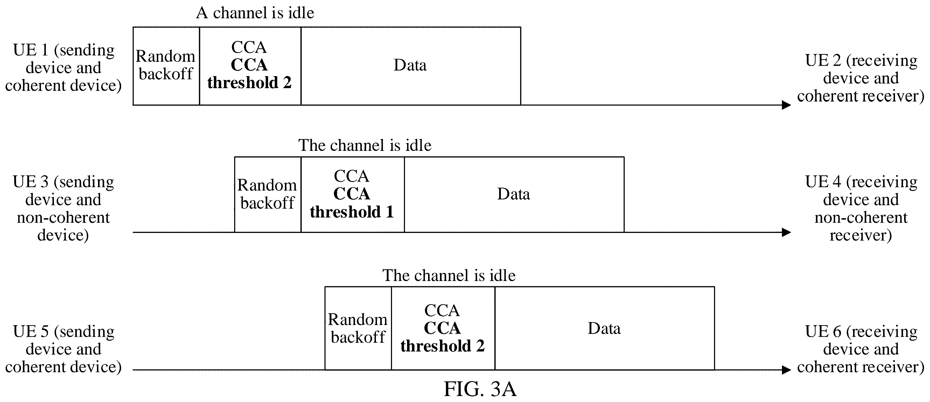

For example, as shown in FIG. 3A, the CCA threshold used by the sending device corresponding to the non-coherent receiver is a CCA threshold 1, the CCA threshold used by the sending device corresponding to the coherent receiver is a CCA threshold 2, and the CCA threshold 1 is less than the CCA threshold 2. UE 1 is to send data to UE 2, and the UE 2 uses a coherent receiver. According to the channel access method shown in FIG. 2, the UE 1 performs CCA detection after random backoff. If it is determined that signal energy in CCA duration is less than the CCA threshold 2, the UE 1 considers that a channel is idle, and may send the data to the UE 2. UE 3 is to send data to UE 4, and the UE 4 uses a non-coherent receiver. If it is determined that signal energy in the CCA duration is less than the CCA threshold 1, the UE 3 considers that the channel is idle, and may send the data to the UE 4. In this case, the UE 1 and the UE 3 both access the channel to send data, and specific interference is accumulated. Then, UE 5 is to send data to UE 6, and the UE 6 uses a coherent receiver. If it is determined that signal energy in the CCA duration is less than the CCA threshold 2, the UE 5 considers that the channel is idle, and may send the data to the UE 6. However, the UE 5 accesses the channel to send the data. This increases channel interference. In addition, receiving performance of a non-coherent receiver is weaker than that of a coherent receiver. The increased interference affects receiving performance of the UE 4, and leads to deterioration of the receiving performance of the non-coherent receiver.

In this implementation, the sending device corresponding to the coherent receiver uses a CCA threshold with a relatively large value, and the sending device corresponding to the non-coherent receiver uses a CCA threshold with a relatively small value, so that the sending device corresponding to the coherent receiver is more likely to access the channel to send data. However, as a number of devices that access the channel increases, interference becomes increasingly strong, and receiving performance of the non-coherent receiver is reduced.

In another implementation, a CCA threshold used by a sending device corresponding to a coherent receiver is the same as a CCA threshold used by a sending device corresponding to a non-coherent receiver. In addition, in consideration of anti-interference performance of the non-coherent receiver, a value of the CCA threshold is relatively small.

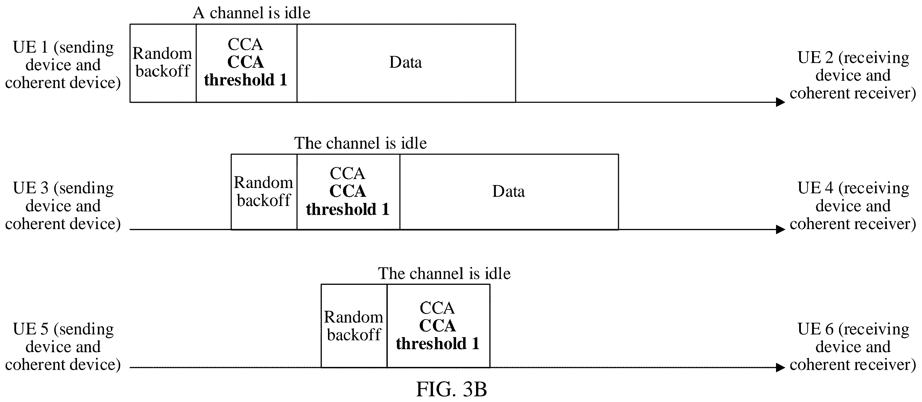

For example, as shown in FIG. 3B, CCA thresholds respectively used by sending devices corresponding to the non-coherent receiver and the coherent receiver are a CCA threshold 1. UE 1 is to send data to UE 2, and performs CCA detection after random backoff. If it is determined that signal energy in CCA duration is less than the CCA threshold 1, the UE 1 considers that a channel is idle, and may send the data to the UE 2. Similarly, UE 4 uses a coherent receiver. If it is determined that signal energy in the CCA duration is less than the CCA threshold 1, UE 3 considers that the channel is idle, and may send data to the UE 4. Then, UE 5 is to send data to UE 6, and the UE 6 uses a coherent receiver. If it is determined that signal energy in the CCA duration is greater than the CCA threshold 1, the UE 5 considers that the channel is busy, and cannot send data to the UE 6. However, because the UE 2, the UE 4, and the UE 6 all use a coherent receiver, an anti-interference capability is relatively strong. Even if the UE 5 accesses the channel, receiver performance of the UE 2 and the UE 4 is not greatly affected. In this case, the UE 5 uses the CCA threshold with the relatively small value, and in turn reduces a system capacity.

In this implementation, the sending device corresponding to the coherent receiver and the sending device corresponding to the non-coherent receiver use the same CCA threshold. Because the CCA threshold is relatively small, it is more likely to determine that the channel is busy during the CCA detection. Consequently, it is difficult for a coherent device that can access the channel to access the channel to send data, and the system capacity is small.

It may be learned that, in a scenario in which the coherent receiver and the non-coherent receiver coexist, the receiving performance of the non-coherent receiver and a capacity of a communication system cannot be well balanced. This results in poor system performance of a UWB system.

This application provides a channel access algorithm, where the method is applicable to a communication scenario in which a coherent receiver and a non-coherent receiver coexist, and is applied to a process in which a sending device corresponding to a receiving device using a coherent receiver performs CCA detection. Two CCA thresholds are set. In a communication environment, if a receiving device using a non-coherent receiver is receiving data, a sending device corresponding to a coherent receiver performs CCA detection by using a CCA threshold with a relatively small value, and can access a channel only when interference is relatively weak, to avoid impact of accessing the channel by the sending device on receiving performance of the non-coherent receiver receiving the data. If no receiving device using a non-coherent receiver is receiving data, a sending device corresponding to a coherent receiver performs CCA detection by using a CCA threshold with a relatively large value, to increase a probability that the sending device successfully accesses a channel, so that a system capacity is improved. In the scenario in which the coherent receiver and the non-coherent receiver coexist, receiving performance of the non-coherent receiver and a capacity of a communication system are considered, and system performance of a UWB system is improved.

It should be noted that a process in which the sending device corresponding to the receiving device using the non-coherent receiver performs the CCA detection may be the same as that in a conventional technology.

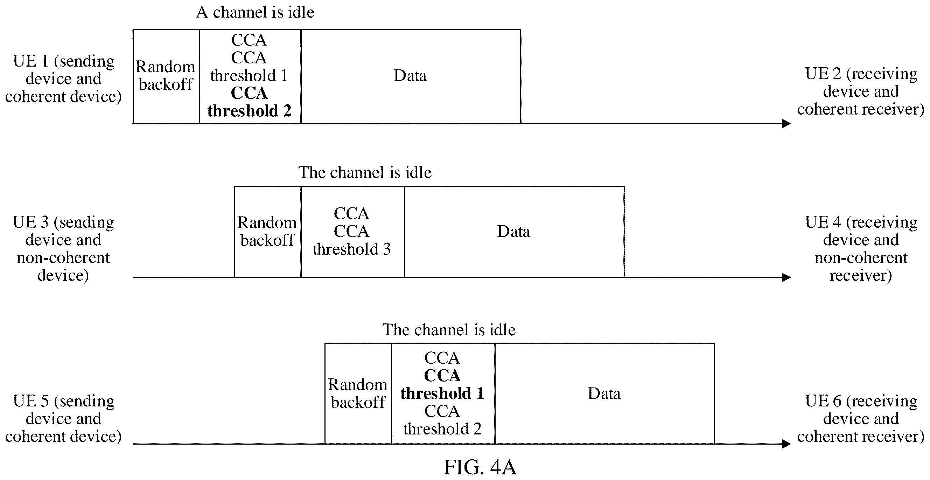

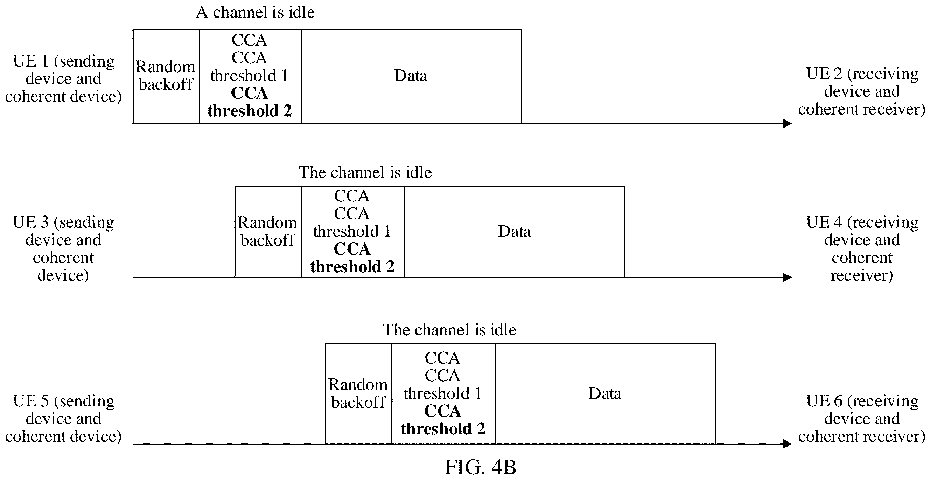

The following describes an example of a channel access method provided in this application with reference to FIG. 4A and FIG. 4B. For a sending device corresponding to a coherent receiver, two specified CCA thresholds include a CCA threshold 1 and a CCA threshold 2, and the CCA threshold 1 is less than the CCA threshold 2. A CCA threshold used by a sending device corresponding to a non-coherent receiver is a CCA threshold 3, and the CCA threshold 3 may be the CCA threshold 1 in FIG. 3A and FIG. 3B.

In an example, as shown in FIG. 4A, UE 1 is to send data to UE 2, and the UE 2 uses a coherent receiver. No terminal device using a non-coherent receiver is receiving data, so that the CCA threshold 2 with a relatively large value is used. If it is determined that signal energy in CCA duration is less than the CCA threshold 2, the UE 1 considers that a channel is idle, and may send the data to the UE 2. UE 3 is to send data to UE 4, and the UE 4 uses a non-coherent receiver. If it is determined that signal energy in the CCA duration is less than the CCA threshold 3, the UE 3 considers that the channel is idle, and may send the data to the UE 4. UE 5 is to send data to UE 6, and the UE 6 uses a coherent receiver. A terminal device (UE 4) using a non-coherent receiver is receiving data, so that the CCA threshold 1 with a relatively small value is used. If it is determined that the signal energy in the CCA duration is greater than the CCA threshold 1, the UE 5 considers that the channel is busy, and cannot send the data to the UE 6. This avoids deterioration of receiving performance of the UE 4 due to accessing of the UE 5 to the channel.

In another example, as shown in FIG. 4B, UE 1 is to send data to UE 2, and the UE 2 uses a coherent receiver. No terminal device using a non-coherent receiver is receiving data, so that the CCA threshold 2 with a relatively large value is used. If it is determined that signal energy in CCA duration is less than the CCA threshold 2, the UE 1 considers that a channel is idle, and may send the data to the UE 2. UE 3 is to send data to UE 4, and the UE 4 uses a coherent receiver. No terminal device using a non-coherent receiver is receiving data, so that the CCA threshold 2 with a relatively large value is used. If it is determined that signal energy in the CCA duration is less than the CCA threshold 2, the UE 3 considers that the channel is idle, and may send the data to the UE 4. Similarly, UE 6 also uses a coherent receiver. If it is determined, by using the CCA threshold 2, that the channel is idle, UE 5 may send data to the UE 6. This increases a system capacity.

The following describes concepts in this application.

### 1. Coherent receiver, and non-coherent receiver

In a receiving device, the coherent receiver uses carrier phase information to detect, and receives a signal. In a coherent receiving manner, the coherent receiver generates a carrier signal having same frequency and a same phase as a transmitter, to perform down-conversion and phase detection on the received signal. Therefore, phase synchronization generally needs to be performed by using a high-frequency phase-locked loop (phase-locked loop, PLL), and implementation complexity and power consumption are high.

In a receiving device, the non-coherent receiver receives a signal without performing detection using carrier phase information. In a non-coherent receiving manner, the non-coherent receiver may demodulate the signal in an envelope detection manner, an energy detection manner, or the like, and does not need functional modules such as a high-frequency PLL and a high-frequency analog-to-digital converter (analog-to-digital converter, ADC). In comparison with the coherent receiver, the non-coherent receiver has lower implementation costs and power consumption. However, because the non-coherent receiver does not use the phase information, the non-coherent receiver has poorer receiving performance and anti-interference capability than the coherent receiver.

### 2. First terminal device, second terminal device, third terminal device, fourth terminal device, sending device, receiving device, coherent device, and non-coherent device

This application relates to a plurality of terminal devices based on different data transmission directions and different receiving manners used by the receiving device.

The first terminal device communicates with the second terminal device. Specifically, the first terminal device sends data to the second terminal device, and the second terminal device uses a coherent receiver.

The third terminal device communicates with the fourth terminal device. Specifically, the third terminal device sends data to the fourth terminal device, and the fourth terminal device uses a non-coherent receiver.

For brevity of description, in this application, a receiving terminal device using a coherent receiver is also referred to as a "coherent receiver", and a receiving terminal device using a non-coherent receiver is also referred to as a "non-coherent receiver".

The first terminal device and the third terminal device are also referred to as sending devices, and the second terminal device and the fourth terminal device are also referred to as receiving devices.

Based on the different receiving manners used by the receiving device, a sending device corresponding to the receiving device may also have different names. A sending device corresponding to a receiving device using a coherent receiver may be referred to as a coherent device. A sending device corresponding to a receiving device using a non-coherent receiver may be referred to as a non-coherent device. In other words, sending devices include the coherent device and the non-coherent device. The first terminal device is a coherent device, and the third terminal device is a non-coherent device.

### 3. First threshold and second threshold

CCA thresholds used when a first terminal device (or a coherent device) performs CCA includes the first threshold and the second threshold. The first threshold is less than the second threshold.

When a terminal device using a non-coherent receiver is receiving data in a communication environment, the CCA is performed based on the first threshold. Because the first threshold with a relatively small value is used, it is difficult for the first terminal device to access a channel to send data. This reduces impact on the non-coherent receiver that is receiving the data, and ensures receiving performance of the non-coherent receiver in a communication scenario in which a coherent receiver and a non-coherent receiver coexist.

When no terminal device using a non-coherent receiver is receiving data in a communication environment, the CCA is performed based on the second threshold. Because the second threshold with a relatively large value is used, the first terminal device is more likely to access a channel to send data. When no terminal device using a non-coherent receiver is receiving data, a capacity of a communication system is increased.

It may be learned that, the two CCA thresholds are set, and in the communication scenario in which the coherent receiver and the non-coherent receiver coexist, different CCA thresholds are used depending on whether a terminal device using a non-coherent receiver is receiving data, so that the receiving performance of the non-coherent receiver and the capacity of the communication system are well balanced, and system performance of the communication system is improved.

Values of the first threshold and the second threshold are not limited in this application. Optionally, the first threshold and the second threshold may be preconfigured. For example, the first threshold is noise power+5 dB, and the second threshold is noise power+15 dB.

### 4. Energy detection-based CCA algorithm, third CCA duration, second signal energy, and first threshold (threshold 31) and second threshold (threshold 32) that correspond to the energy detection-based CCA algorithm

For ease of differentiation, CCA duration related to the energy detection-based CCA algorithm is referred to as the third CCA duration, and related signal energy is referred to as the second signal energy. The first threshold corresponding to the energy detection-based CCA algorithm is marked as the threshold 31, and the second threshold corresponding to the energy detection-based CCA algorithm is marked as the threshold 32.

In the energy detection-based CCA algorithm, a signal that is being transmitted on a channel is detected in the third CCA duration, and square summation is performed on a received signal, to obtain the second signal energy.

If the second signal energy is less than the first threshold (threshold 31) corresponding to the energy detection-based CCA algorithm, it is determined that the channel is idle.

Specifically, when it is determined that no terminal device using a non-coherent receiver is receiving data, the first threshold corresponding to the energy detection-based CCA algorithm is used. If the second signal energy is less than the threshold 31, it is determined that the channel is idle, and a first terminal device may send data to a second terminal device. Alternatively, when it is not determined whether a terminal device using a non-coherent receiver is receiving data, if the second signal energy is less than the threshold 31, it is determined that the channel is idle and channel interference is relatively weak. Therefore, regardless of whether a non-coherent receiver is receiving data, accessing of a first terminal device to the channel does not affect receiving performance of the non-coherent receiver, and the first terminal device may send data to a second terminal device.

If the second signal energy is greater than the second threshold (threshold 32) corresponding to the energy detection-based CCA algorithm, it is determined that the channel is busy.

Specifically, when it is determined that a terminal device using a non-coherent receiver is receiving data, the second threshold corresponding to the energy detection-based CCA algorithm is used. If the second signal energy is greater than the threshold 32, it is determined that the channel is busy, and a first terminal device cannot send data to a second terminal device. Alternatively, when it is not determined whether a terminal device using a non-coherent receiver is receiving data, if the second signal energy is greater than the threshold 32, it is determined that the channel is busy and channel interference is relatively strong. Therefore, regardless of whether a non-coherent receiver is receiving data, a first terminal device cannot send data to a second terminal device, to avoid further increasing the channel interference.

If the second signal energy is greater than or equal to the first threshold (threshold 31) corresponding to the energy detection-based CCA algorithm, and the second signal energy is less than or equal to the second threshold (threshold 32) corresponding to the energy detection-based CCA algorithm, and it is not determined whether a terminal device using a non-coherent receiver is receiving data, whether a terminal device using a non-coherent receiver is receiving data needs to be further determined, to determine whether the channel is idle or busy.

### 5. Preamble symbol detection-based CCA algorithm, dedicated preamble symbol detection-based CCA algorithm, first preamble symbol, first CCA duration, third signal energy, threshold 11, threshold 12, second preamble symbol, second CCA duration, fourth signal energy, threshold 21, and threshold 22

A method for performing CCA detection based on a preamble symbol is referred to as the preamble symbol detection-based CCA algorithm. In the preamble symbol detection-based CCA algorithm, a sending device detects, in CCA duration, a signal that is being transmitted on a channel, performs sliding correlation based on the preamble symbol, and performs square summation on a result obtained by multiplying the preamble symbol by a received signal, to obtain signal correlation energy. The signal correlation energy is compared with a CCA threshold, to determine whether a channel is idle or busy.

This application relates to three preamble symbols, including the first preamble symbol, the second preamble symbol, and a third preamble symbol. The first preamble symbol indicates that a terminal device receives data by using a non-coherent receiver, the second preamble symbol indicates that a terminal device receives data by using a coherent receiver, and the third preamble symbol is used for synchronization.

The first preamble symbol and the second preamble symbol may be referred to as dedicated preamble symbols. A preamble symbol detection-based CCA algorithm performed based on a first preamble symbol and a preamble symbol detection-based CCA algorithm performed based on a second preamble symbol may be referred to as dedicated preamble symbol detection-based CCA algorithms. Whether the channel is idle or busy may be determined by performing CCA by using the dedicated preamble symbol detection-based CCA algorithm. In addition, whether a terminal device using a non-coherent receiver is receiving data or whether a terminal device using a coherent receiver is receiving data may be determined.

For ease of differentiation, in the dedicated preamble symbol detection-based CCA algorithm performed based on the first preamble symbol, related CCA duration is referred to as the first CCA duration, and related signal correlation energy is referred to as the third signal energy. A first threshold corresponding to the dedicated preamble symbol detection-based CCA algorithm performed based on the first preamble symbol is marked as the threshold 11, and a second threshold corresponding to the dedicated preamble symbol detection-based CCA algorithm performed based on the first preamble symbol is marked as the threshold 12.

If the third signal energy is greater than the first threshold (threshold 11) corresponding to the preamble symbol detection-based CCA algorithm performed based on the first preamble symbol, it is determined that the channel is busy. In addition, it may be determined that a terminal device using a non-coherent receiver is receiving data. In this case, a first terminal device cannot send data to a second terminal device, to avoid increasing channel interference and impact on a non-coherent receiver that is receiving data.

If the third signal energy is less than or equal to the first threshold (threshold 11) corresponding to the preamble symbol detection-based CCA algorithm performed based on the first preamble symbol, it is determined that no terminal device using a non-coherent receiver is receiving data. In this case, no non-coherent receiver or non-coherent device needs to be avoided, that is, no terminal device is receiving data, or all terminal devices that are receiving data use coherent receivers. Therefore, whether a coherent receiver or a coherent device needs to be avoided needs to be further determined, to determine whether the channel is idle or busy.

Similarly, in the dedicated preamble symbol detection-based CCA algorithm performed based on the second preamble symbol, related CCA duration is referred to as the second CCA duration, and related signal correlation energy is referred to as the fourth signal energy. A first threshold corresponding to the dedicated preamble symbol detection-based CCA algorithm performed based on the second preamble symbol is marked as the threshold 21, and a second threshold corresponding to the dedicated preamble symbol detection-based CCA algorithm performed based on the second preamble symbol is marked as the threshold 22.

If the fourth signal energy is greater than the second threshold (threshold 22) corresponding to the preamble symbol detection-based CCA algorithm performed based on the second preamble symbol, it is determined that the channel is busy. In addition, it may be determined that a terminal device using a coherent receiver is receiving data. In this case, channel interference is relatively strong, and a first terminal device cannot send data to a second terminal device, to avoid further increasing the channel interference.

If the fourth signal energy is less than or equal to the second threshold (threshold 22) corresponding to the preamble symbol detection-based CCA algorithm performed based on the second preamble symbol, it is determined that no terminal device using a coherent receiver is receiving data. In this case, no coherent receiver or coherent device needs to be avoided, that is, no terminal device is receiving data, or all terminal devices that are receiving data use non-coherent receivers. Therefore, whether a non-coherent receiver or a non-coherent device needs to be avoided needs to be further determined, to determine whether the channel is idle or busy.

Values of the threshold 11 and the threshold 21 may be the same, or may be different. Values of the threshold 12 and the threshold 22 may be the same, or may be different. For example, the threshold 11 and the threshold 21 are both noise power+5 dB, and the threshold 12 and the threshold 22 are both noise power+15 dB.

Optionally, a first threshold corresponding to an energy detection-based CCA algorithm and the first threshold corresponding to the dedicated preamble symbol detection-based CCA algorithm have different values.

Optionally, a second threshold corresponding to an energy detection-based CCA algorithm and the second threshold corresponding to the dedicated preamble symbol detection-based CCA algorithm have different values.

In the energy detection-based CCA algorithm and the preamble symbol detection-based CCA algorithm, signal energy is computed in different manners. Therefore, different CCA thresholds may be separately set.

### 6. Third threshold, first duration, and first signal energy

The third threshold is used to determine whether a terminal device using a non-coherent receiver is receiving data.

Whether a terminal device using a non-coherent receiver is receiving data is determined in the following manner:
obtaining the first signal energy in the first duration based on a first preamble symbol. The first preamble symbol indicates that a terminal device receives data by using a non-coherent receiver.

If the first signal energy is greater than the third threshold, it is determined that a terminal device using a non-coherent receiver is receiving data.

If the first signal energy is less than or equal to the third threshold, it is determined that no terminal device using a non-coherent receiver is receiving data.

Specifically, a signal that is being transmitted on a channel is detected in the first duration, sliding correlation is performed based on the first preamble symbol, and square summation is performed on a result obtained by multiplying the first preamble symbol by a received signal, to obtain the first signal energy. The first signal energy is compared with the third threshold. If the first signal energy is greater than the third threshold, it indicates that a terminal device using a non-coherent receiver is receiving data. If the first signal energy is less than or equal to the third threshold, it indicates that no terminal device using a non-coherent receiver is receiving data.

Optionally, in an implementation, a step of obtaining the first signal energy to determine whether a terminal device using a non-coherent receiver is receiving data is a step performed before CCA detection. In this implementation, whether a terminal device using a non-coherent receiver is receiving data is first determined, and then the CCA detection is performed.

Optionally, in another implementation, a step of obtaining the first signal energy to determine whether a terminal device using a non-coherent receiver is receiving data is a CCA detection process based on dedicated preamble symbol detection performed based on the first preamble symbol. In this implementation, whether a terminal device uses a non-coherent receiver and whether a channel is idle or busy may be determined at the same time by using a dedicated preamble symbol detection-based CCA algorithm performed based on a first preamble symbol. This is easy to implement. In this case, the first duration is first CCA duration, the first signal energy is third signal energy, and the third threshold is a threshold 11.

### 7. Preamble code sequence, preamble symbol, first preamble symbol, second preamble symbol, third preamble symbol, dedicated preamble code sequence, and dedicated preamble symbol

The preamble symbol is generated based on the preamble code sequence. The preamble code sequence is also referred to as a preamble code. Generally, a plurality of preamble code sequences are preset, and different preamble code sequences have good cross-correlation. The good cross-correlation means that a cross-correlation value between different preamble code sequences is less than a preset value.

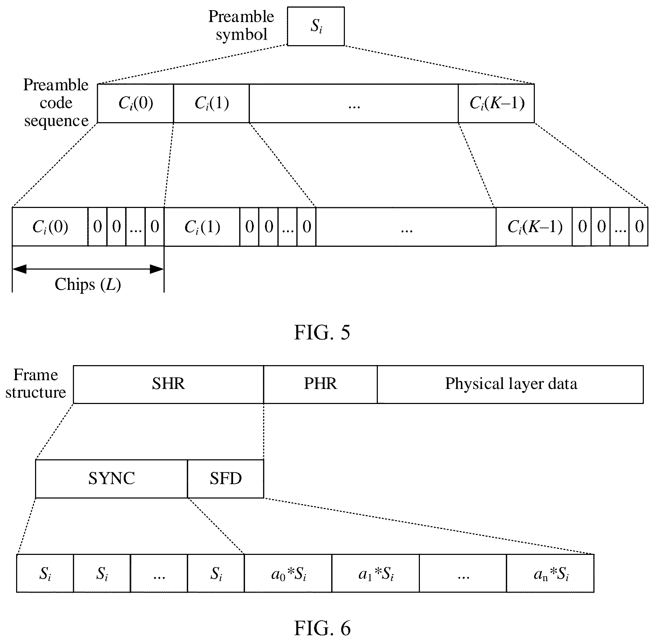

For example, FIG. 5 is a diagram of a preamble code sequence and a preamble symbol according to an embodiment of this application. As shown in FIG. 5, Cᵢ indicates the preamble code sequence, and includes K elements marked as Cᵢ(0), Cᵢ(1), Cᵢ(2), ..., Cᵢ(K - 2), and Cᵢ(K - 1). K is a length of the preamble code sequence. Sᵢ indicates the preamble symbol, and is generated by inserting L - 1 zeros between two adjacent elements in the preamble code sequence Cᵢ, where L is referred to as a chip (chips) periodicity of the preamble symbol. A length of the preamble symbol is K * L, and a total of K * L chips are occupied. i indicates a number in the plurality of preset preamble code sequences.

This application relates to three preamble symbols, including the first preamble symbol, the second preamble symbol, and the third preamble symbol. The first preamble symbol indicates that a terminal device receives data by using a non-coherent receiver, the second preamble symbol indicates that a terminal device receives data by using a coherent receiver, and the third preamble symbol is used for synchronization. The first preamble symbol and the second preamble symbol are also referred to as dedicated preamble symbols, and a preamble code sequence used for the first preamble symbol and a preamble code sequence used for the second preamble symbol are also referred to as the dedicated preamble code sequences.

To improve accuracy of determining whether a terminal device using a non-coherent receiver is receiving data, improve accuracy of determining whether a terminal device using a coherent receiver is receiving data, and reduce impact on a synchronization function, the first preamble symbol and the third preamble symbol need to have good cross-correlation, the second preamble symbol and the third preamble symbol need to have good cross-correlation, and the first preamble symbol and the second preamble symbol need to have good cross-correlation. Particularly, when a third preamble symbol used by a coherent device and a third preamble symbol used by a non-coherent device are from sets that are not identically the same, the first preamble symbol only needs to have good cross-correlation with the third preamble symbol that can be used by the coherent receiver, and the second preamble symbol only needs to have good cross-correlation with the third preamble symbol that can be used by the non-coherent receiver.

Alternatively, a cross-correlation value between the preamble code sequence used for the first preamble symbol and a preamble code sequence used for a third preamble symbol is less than a preset value. A cross-correlation value between the preamble code sequence used for the second preamble symbol and a preamble code sequence used for a third preamble symbol is less than a preset value. A cross-correlation value between the preamble code sequence used for the first preamble symbol and the preamble code sequence used for a second preamble symbol is less than a preset value. Particularly, when a preamble code sequence used for a third preamble symbol used by a coherent device and a preamble code sequence used for a third preamble symbol used by a non-coherent device are from sets that are not identically the same, the preamble code sequence used for the first preamble symbol only needs to have good cross-correlation with the preamble code sequence corresponding to the third preamble symbol that can be used by the coherent receiver, and the preamble code sequence used for the second preamble symbol only needs to have good cross-correlation with the preamble code sequence corresponding to the third preamble symbol that can be used by the non-coherent receiver.

For ease of differentiation, the first preamble symbol is indicated as S₀, the second preamble symbol is indicated as S₁, and the third preamble symbol is indicated as Sᵢ.

A number of first preamble symbols, a number of second preamble symbols, and a number of third preamble symbols are not limited in this application. There is at least one first preamble symbol and at least one second preamble symbol. There are a plurality of third preamble symbols.

A number of preamble code sequences that can be used for the first preamble symbol, a number of preamble code sequences that can be used for the second preamble symbol, and a number of preamble code sequences that can be used for the third preamble symbol are not limited in this application. At least one preamble code sequence may be used for the first preamble symbol, and at least one preamble code sequence may be used for the second preamble symbol. A plurality of preamble code sequences are used for the third preamble symbol. Particularly, to reduce blind detection complexity of a preamble symbol detection-based CCA algorithm, the first preamble symbol may have only one preset configuration, and the second preamble symbol may have only one preset configuration.

### 8. Frame structure, synchronization header, synchronization field, start-of-frame delimiter field, physical header, and physical layer data

Data sending of a sending device to a receiving device is represented as a frame structure at a physical layer. In this application, sending data, sending a data frame, and sending a frame structure have a same meaning.

This application relates to three frame structures, including an existing frame structure used in a conventional technology, a first frame structure formed by inserting a first preamble symbol based on the existing frame structure, and a second frame structure formed by inserting a second preamble symbol based on the existing frame structure. The existing frame structure is also directly referred to as the frame structure.

First, the existing frame structure is described.

FIG. 6 is a diagram of a frame structure sent by a sending device in a conventional technology. As shown in FIG. 6, the frame structure may include a synchronization header (synchronization header, SHR), a physical header (PHY header, PHR), and physical layer data (PHY payload). The SHR includes a synchronization (synchronization, SYNC) field and a start-of-frame delimiter (start-of-frame delimiter, SFD) field. The SFD is used to determine a start position of the PHR.

The SYNC field includes a plurality of repeated third preamble symbols Sᵢ. A number of repetitions of the third preamble symbol is not limited in this application. The SFD field is formed by multiplying the third preamble symbol Sᵢ by a spreading code of a specific length. For example, the spreading code is indicated as a₀, a₁, ..., and aₙ, and the SFD field includes a₀ * Sᵢ, a₁ * Sᵢ, ..., and aₙ * Sᵢ.

The third preamble symbol Sᵢ may be configured by the sending device for a receiving device, or may be negotiated by the sending device and a receiving device.

It should be noted that the frame structure may further include another field. This is not limited in this application.

The sending device performs a channel access method, determines, through CCA detection, that a channel is idle, and sends the frame structure shown in FIG. 6 to the receiving device. Correspondingly, the receiving device may implement synchronization by detecting the third preamble symbol in the SYNC. For example, the receiving device performs correlation with a received signal by using a locally stored third preamble symbol Sᵢ, and ensures detection reliability by using a good self-correlation feature of a preamble code sequence and a good cross-correlation feature between different preamble code sequences. After the synchronization is implemented, the receiving device correctly detects an SFD, to determine the start position of the PHR. It may be considered that the SFD is followed by the PHR, and the PHR and the physical layer data start to be decoded.

### 9. First frame structure

In this application, after CCA detection, a sending device (a third terminal device or a non-coherent device) corresponding to a terminal device using a non-coherent receiver sends a first frame structure to a fourth terminal device if it is determined that a channel is idle, so that another terminal device that is to send data determines, by detecting a first preamble symbol in the first frame structure, that a terminal device using a non-coherent receiver is receiving data.

The first frame structure is formed by inserting the first preamble symbol based on the frame structure shown in FIG. 6, and has different implementations based on an insertion position of the first preamble symbol in the frame structure. The first preamble symbol may be inserted into at least one of the SYNC, the SFD, the PHR, and the physical layer data.

Related parameters of the first frame structure include: a dedicated preamble code sequence used for the first preamble symbol, a chip periodicity of the dedicated preamble code sequence, a time interval at which the first preamble symbol is periodically inserted into the SYNC, the SFD, the PHR, or the physical layer data, and a number of first preamble symbols inserted into the SYNC, the SFD, the PHR, or the physical layer data each time or a time length of the first preamble symbol inserted into the SYNC, the SFD, the PHR, or the physical layer data each time. It may be understood that time lengths of inserted first preamble symbols are equal to a number of inserted first preamble symbols multiplied by a time length of the first preamble symbol. The related parameters of the first frame structure may also be referred to as related parameters of the first preamble symbol.

Optionally, the related parameters of the first frame structure are preconfigured.

Time intervals at which the first preamble symbol is periodically inserted into the SYNC, the SFD, the PHR, or the physical layer data may be the same or may be different, and numbers of first preamble symbols inserted each time may be the same or may be different.

For ease of description, in this application, time intervals at which the first preamble symbol is periodically inserted into the PHR and the physical layer data are the same, and are marked as a time interval T1. Numbers of first preamble symbols inserted each time are the same, and are marked as M, where M is a positive integer. Time intervals at which the first preamble symbol is periodically inserted into the SYNC and the SFD are the same, and are marked as a time interval T2. Numbers of first preamble symbols inserted each time are the same, and are marked as N, where N is a positive integer. The time length of the first preamble symbol is T0. Therefore, a time length of the first preamble symbol inserted each time into the PHR and the physical layer data=M*TO, and a time length of the first preamble symbol inserted each time into the SYNC and the SFD=N*T0.

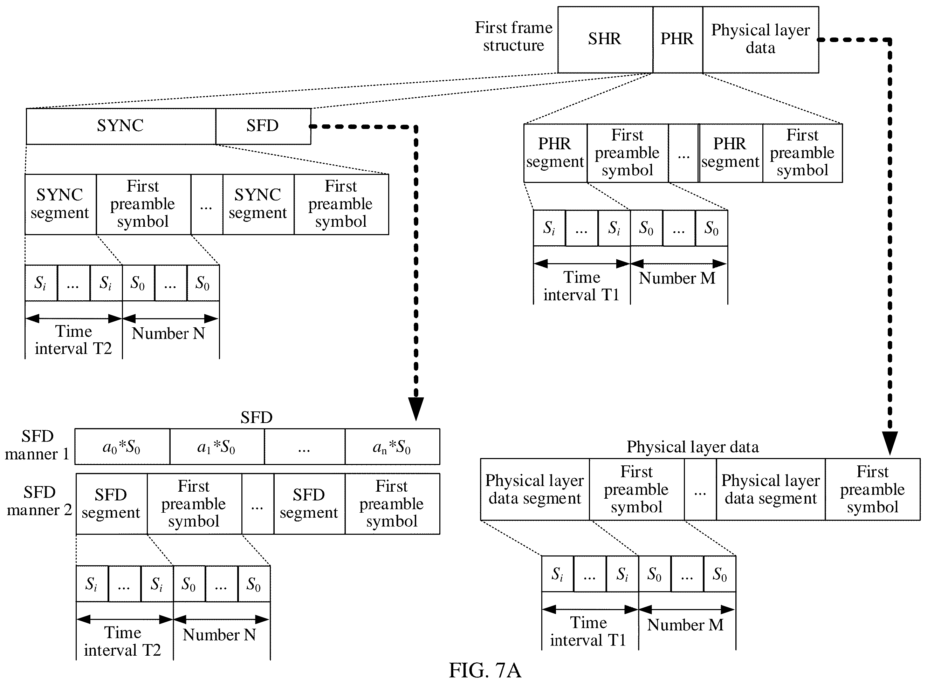

Values of M and N are not limited in this application.
(1) In a first manner, refer to FIG. 7A. The SYNC, the SFD, the PHR, and the physical layer data each include the first preamble symbol.

The SYNC includes a plurality of repeated third preamble symbols Sᵢ. A number of third preamble symbols Sᵢ is not limited in this application. In the SYNC, the plurality of third preamble symbols Sᵢ are segmented to obtain at least two SYNC segments (SYNC segments), and a length of each SYNC segment is the time interval T2. Optionally, a length of a last SYNC segment may be less than or equal to the time interval T2. N first preamble symbols S₀ are inserted between two adjacent SYNC segments.

Optionally, to reduce impact of inserting of the first preamble symbol S₀ into the SYNC on a synchronization function, the N first preamble symbols S₀ are located after an end position of a former third preamble symbol Sᵢ and before a start position of a latter third preamble symbol Sᵢ in two adjacent third preamble symbols Sᵢ. In other words, each SYNC segment needs to include a complete third preamble symbol Sᵢ, and the first preamble symbol S₀ cannot be inserted into one third preamble symbol Sᵢ.

For the SFD, in an implementation, for example, as shown in an SFD manner 1 in FIG. 7A, the SFD is generated based on the first preamble symbol and a spreading code. For example, the spreading code is indicated as a₀, a₁, ..., and aₙ, and the SFD field includes a₀ * S₀, a₁ * S₀, ..., and aₙ * S₀.

In this implementation, the SFD is directly generated through spreading based on the first preamble symbol, and there is no need to insert the first preamble symbol. A length of the SFD remains unchanged, a length of the first frame structure is reduced, and a data transmission amount is reduced.

For the SFD, in another implementation, for example, as shown in an SFD manner 2 in FIG. 7A, a third preamble symbol Sᵢ is used for spreading the SFD. The SFD is segmented to obtain at least two SFD segments (SFD segments), and a length of each SFD segment is the time interval T2. Optionally, a length of a last SFD segment may be less than or equal to the time interval T2. The N first preamble symbols S₀ are inserted between two adjacent SFD segments.

In this implementation, an existing spreading manner of the SFD is not changed, and the first preamble symbol is periodically inserted into the SFD, so that the SFD includes the first preamble symbol.

Optionally, to avoid impact of inserting the first preamble symbol S₀ into the SFD on correct SFD detection, the N first preamble symbols S₀ are located after an end position of a former third preamble symbol Sᵢ and before a start position of a latter third preamble symbol Sᵢ in two adjacent third preamble symbols Sᵢ. In other words, each SFD segment needs to include a complete third preamble symbol Sᵢ, and specifically includes a part obtained by multiplying the complete third preamble symbol Sᵢ by the spreading code, for example, includes complete a₀ * Sᵢ and a₁ * Sᵢ, and the first preamble symbol S₀ cannot be inserted into one third preamble symbol Sᵢ.

Optionally, the time interval T2 is related to a time length of the third preamble symbol or a time length of a preamble code sequence used for the third preamble symbol.

An example is used for description. It is assumed that UE 1 sends data to UE 2, UE 3 sends data to UE 4, and the UE 2 and the UE 4 both use a non-coherent receiver. The UE 1 and the UE 3 both send a first frame structure. A third preamble symbol 1 is used between the UE 1 and the UE 2, and the third preamble symbol 1 is generated by using a preamble code sequence 1. A third preamble symbol 3 is used between the UE 3 and the UE 4, and the third preamble symbol 3 is generated by using a preamble code sequence 3. Time lengths of the third preamble symbol 1 and the third preamble symbol 3 are different, or time lengths of the preamble code sequence 1 and the preamble code sequence 3 are different. In this case, for the first frame structure sent by the UE 1, a time interval T21 at which the first preamble symbol is inserted between a plurality of third preamble symbols 1 in the SYNC and the SFD is related to a time length of the third preamble symbol 1 or the preamble code sequence 1. For the first frame structure sent by the UE 3, a time interval T23 at which the first preamble symbol is inserted between a plurality of third preamble symbols 3 in the SYNC and the SFD is related to a time length of the third preamble symbol 3 or the preamble code sequence 3.

The PHR is segmented to obtain at least two PHR segments (PHR segments), and a length of each PHR segment is the time interval T1. Optionally, a length of a last PHR segment may be less than or equal to the time interval T1. M first preamble symbols S₀ are inserted between two adjacent PHR segments.

Inserting the first preamble symbol S₀ into the physical layer data is similar to that of the PHR part. The physical layer data is segmented to obtain at least two physical layer data segments (PHY payload segments), and a length of each physical layer data segment is the time interval T1. Optionally, a length of a last physical layer data segment may be less than or equal to the time interval T1. The M first preamble symbols S₀ are inserted between two adjacent physical layer data segments.

It may be understood that when the time interval T1 and the time interval T2 are different, lengths of first frame structures sent by the third terminal device are different. Time for a first terminal device to obtain first signal energy based on a third threshold and first duration, and determine whether a terminal device using a non-coherent receiver is receiving data may be different. First CCA duration for performing CCA by the first terminal device by using a dedicated preamble symbol detection-based CCA algorithm performed based on a first preamble symbol is different.

Optionally, the first duration or the first CCA duration may be T5+j*TO. j is a positive integer, 1≤j≤max(M, N), max() indicates taking a maximum value, T0 is the time length of the first preamble symbol, and T5 is a largest value in the time interval T1 and a plurality of preset time intervals T2.

It may be learned that the first terminal device needs to obtain a received signal of a time length of at least T5+T0, and detect at least one first preamble symbol S₀, to determine that a terminal device using a non-coherent receiver is receiving data. T5 is the largest value in the time interval T1 and the plurality of preset time intervals T2. An example is used for description. It is assumed that 10 third preamble symbols Sᵢ, are preset. A sending device may select any one of the third preamble symbols Sᵢ to implement synchronization. Because the time interval T2 is related to a time length of the third preamble symbol Sᵢ, the 10 third preamble symbols Sᵢ correspond to G time intervals T2, where 1≤G≤10. T5 is a largest value in the time interval T1 and the 10 time intervals T2.

In this implementation, the SYNC, the SFD, the PHR, and the physical layer data that are sent by a non-coherent device each include a first preamble symbol. This improves a success rate of a coherent sending device to determine whether a terminal device using a non-coherent receiver is receiving data, and avoids large first duration or first CCA duration.

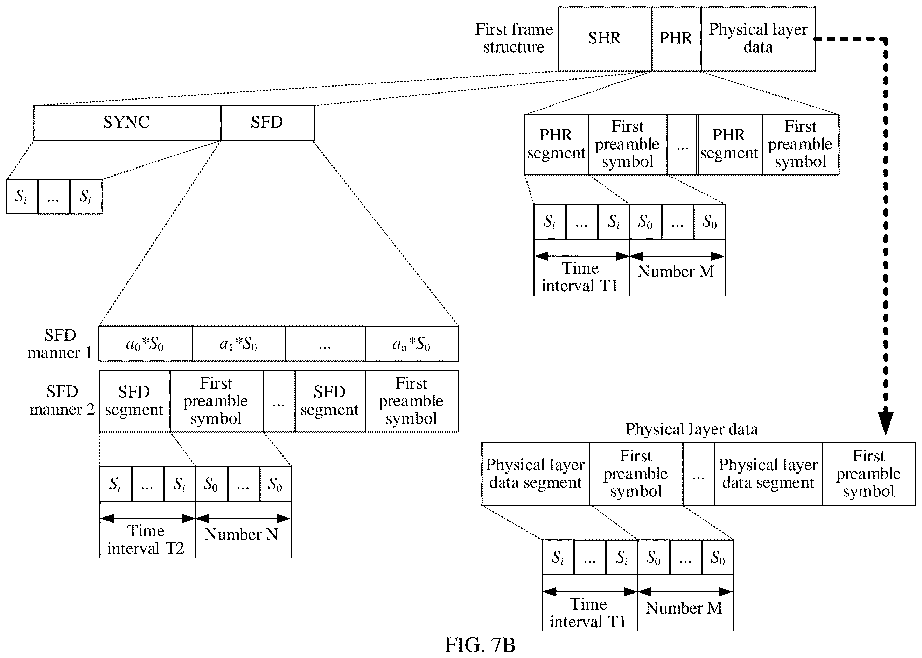

(2) In a second manner, refer to FIG. 7B. The PHR and the physical layer data include the first preamble symbol.

In this implementation, to avoid impact of inserting of the first preamble symbol S₀ on synchronization performance, the first preamble symbol S₀ is inserted only into the PHR and the physical layer data. Reference may be made to related descriptions with reference to FIG. 7A. Principles are similar, and details are not described herein again.

For the SFD, in an implementation, the SFD is generated based on the first preamble symbol and a spreading code.

For the SFD, in another implementation, a third preamble symbol Sᵢ is used for spreading the SFD. N first preamble symbols are periodically inserted into the SFD based on the time interval T2. Reference may be made to related descriptions with reference to FIG. 7A. Principles are similar, and details are not described herein again.

It may be understood that, when time intervals T1 are different, lengths of first frame structures sent by the third terminal device are different. Time for a first terminal device to obtain first signal energy based on a third threshold and first duration, and determine whether a terminal device using a non-coherent receiver is receiving data may be different. First CCA duration for performing CCA by the first terminal device by using a dedicated preamble symbol detection-based CCA algorithm performed based on a first preamble symbol is different. In addition, because the SYNC does not include a first preamble symbol, and the SFD has different spreading manners, in a process in which the first terminal device obtains third signal energy or the first signal energy, the first duration and the first CCA duration may be gradually prolonged. The following provides detailed descriptions.

Optionally, the first duration or the first CCA duration may be the time interval T1+j*T0, j is a positive integer, 1≤j≤M, and T0 is the time length of the first preamble symbol.

Specifically, the PHR and the physical layer data include the first preamble symbol. The SFD may include a first preamble symbol, or may not include a first preamble symbol. This depends on a preamble symbol used during SFD spreading. The SYNC does not include a first preamble symbol. In this case, the SFD and the SYNC are not considered first, and the first duration or the first CCA duration is related to the time length T0 of the first preamble symbol and the time interval T1 at which the first preamble symbol is inserted into the PHR and the physical layer data.

The first CCA duration is used as an example. In a detection process, the first terminal device may perform sliding correlation on the first preamble symbol S₀ and a received signal in the first CCA duration, to obtain first correlation energy. The first CCA duration is the time interval T1+j*T0. If the first correlation energy is greater than a first threshold (threshold 11) corresponding to the preamble symbol detection-based CCA algorithm performed based on the first preamble symbol, the first correlation energy is determined as third signal energy, and it is determined that a terminal device using a non-coherent receiver is receiving data. If the first correlation energy is less than or equal to a first threshold (threshold 11) corresponding to the preamble symbol detection-based CCA algorithm performed based on the first preamble symbol, the first CCA duration may be prolonged to perform CCA detection again.

It may be understood that the first terminal device needs to obtain a received signal of a time length of at least T1+T0, and detect at least one first preamble symbol S₀, to determine that a terminal device using a non-coherent receiver is receiving data.

Optionally, the first duration or the first CCA duration may be the time interval T1+j*T0+T3, j is a positive integer, 1≤j≤M, T0 is the time length of the first preamble symbol, and T3 is a largest value in a plurality of preset SYNC time lengths.

In this implementation, impact of the SFD and the SYNC on the first duration or the first CCA duration is considered. It is assumed that the first preamble symbol is used for spreading the SFD, and the SFD includes the first preamble symbol. The SYNC does not include a first preamble symbol. If the first correlation energy obtained by the first terminal device in the first CCA duration of "the time interval T1+j*T0" is less than or equal to the first threshold (threshold 11) corresponding to the preamble symbol detection-based CCA algorithm performed based on the first preamble symbol, the first CCA duration may be prolonged to perform detection again, and a time length of T3 may be prolonged.

Specifically, the first terminal device may perform sliding correlation on the first preamble symbol S₀ and a received signal in the first CCA duration, to obtain the first correlation energy. The first CCA duration is the time interval T1+j*T0+T3. The first correlation energy is determined as the third signal energy. If the third signal energy is greater than the first threshold (threshold 11) corresponding to the preamble symbol detection-based CCA algorithm performed based on the first preamble symbol, it is determined that a terminal device using a non-coherent receiver is receiving data, and it is determined that a channel is busy.

It may be understood that the first terminal device needs to obtain a received signal of a time length of at least T1+T0+T3, and detect at least one first preamble symbol S₀, to determine that a terminal device using a non-coherent receiver is receiving data.

For a SYNC time length, because a plurality of third preamble symbols Sᵢ are preset, time lengths of different third preamble symbols may be different. The SYNC includes a plurality of repeated third preamble symbols Sᵢ. Therefore, based on different third preamble symbols Sᵢ and different numbers of third preamble symbols Sᵢ in the SYNC, the SYNC time length may have a plurality of values. T3 is a largest value in a plurality of preset SYNC time lengths. An example is used for description. It is assumed that the SYNC time lengths include T51, T52, T53, and T54, and T51<T52<T53<T54. In this case, T3 is T54.

Optionally, the first duration or the first CCA duration may be the time interval T1+j*T0+T4, j is a positive integer, 1≤j≤M, T0 is the time length of the first preamble symbol, and T4 is a largest value in a plurality of preset SHR time lengths.

In this implementation, impact of the SFD and the SYNC on the first duration or the first CCA duration is considered. It is assumed that the third preamble symbol is used for spreading the SFD, and the SFD does not include a first preamble symbol. The SYNC does not include a first preamble symbol. If the first correlation energy obtained by the first terminal device in the first CCA duration of "the time interval T1+j*T0" is less than or equal to the first threshold (threshold 11) corresponding to the preamble symbol detection-based CCA algorithm performed based on the first preamble symbol, the first CCA duration may be prolonged to perform detection again, and a time length of T4 may be prolonged.

Specifically, the first terminal device may perform sliding correlation on the first preamble symbol S₀ and a received signal in the first CCA duration, to obtain the first correlation energy. The first CCA duration is the time interval T1+j*T0+T4. The first correlation energy is determined as the third signal energy. If the third signal energy is greater than the first threshold (threshold 11) corresponding to the preamble symbol detection-based CCA algorithm performed based on the first preamble symbol, it is determined that a terminal device using a non-coherent receiver is receiving data, and it is determined that a channel is busy.

It may be understood that the first terminal device needs to obtain a received signal of a time length of at least T1+T0+T4, and detect at least one first preamble symbol S₀, to determine that a terminal device using a non-coherent receiver is receiving data.

For an SHR time length, because a plurality of third preamble symbols Sᵢ are preset, time lengths of different third preamble symbols may be different. The SYNC includes a plurality of repeated third preamble symbols Sᵢ, and the third preamble symbol Sᵢ is used for spreading the SFD. Therefore, the SHR time length may have a plurality of values. T4 is a largest value in a plurality of preset SHR time lengths.

It may be learned that because the PHR and the physical layer data include the first preamble symbol, the SFD may include the first preamble symbol, and the SYNC does not include the first preamble symbol, the first duration or the first CCA duration may have different time lengths. During detection, the first terminal device first performs detection based on a time length "T1+j*T0". If whether a terminal device using a non-coherent receiver is receiving data cannot be determined, the time length is prolonged to "T1+j*T0+T3" or "T1+j*T4" to continue detection.

### 10. Second frame structure

In this application, after CCA detection, a sending device (a first terminal device or a coherent device) corresponding to a terminal device using a coherent receiver sends a second frame structure to a second terminal device if it is determined that a channel is idle, so that another terminal device that is to send data determines, by detecting a second preamble symbol in the second frame structure, that a terminal device using a coherent receiver is receiving data.

The second frame structure is formed by inserting a second preamble symbol based on the frame structure shown in FIG. 6, and has different implementations based on an insertion position of the second preamble symbol in the frame structure. Specifically, in a first manner, a SYNC, an SFD, a PHR, and physical layer data each include the second preamble symbol. In a second manner, a PHR and physical layer data include the second preamble symbol.

Related parameters of the second frame structure or related parameters of the second preamble symbol include: a dedicated preamble code sequence used for the second preamble symbol, a chip periodicity of the dedicated preamble code sequence, a time interval T11 at which the second preamble symbol is periodically inserted into the PHR and the physical layer data, a number A of second preamble symbols inserted each time, a time interval T12 at which the second preamble symbol is periodically inserted into the SYNC and the SFD, and a number B of second preamble symbols inserted each time, where A is a positive integer, and B is a positive integer. A time length of the second preamble symbol is T10.

For the second frame structure, refer to related descriptions of the first frame structure. Principles are similar, and details are not described herein again.

The following describes in detail technical solutions of this application by using specific embodiments.

In embodiments of this application, unless otherwise specified, for same or similar parts of embodiments, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, or implementation method based on an internal logical relationship thereof. The foregoing descriptions are implementations of this application, but are not intended to limit the protection scope of this application. Steps in each embodiment may be partially performed (for example, the terminal device may not perform the steps performed by the terminal device in the foregoing embodiments). An execution sequence of different steps can be changed. Embodiments described in this specification may be combined with other embodiments, and steps of different embodiments in this specification may also be combined.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment.

Terms "first", "second", "third", "fourth", and the like (if any) in embodiments of this application are used to distinguish between similar objects, but not necessarily describe a specific order or sequence.

In embodiments of this application, "include" may be an inclusion relationship or an equal relationship. For example, if A includes B, A may include other content in addition to B, or A and B are the same content.

Unless otherwise specified, "/" in descriptions of this application indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists. A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a number or an execution sequence, and the terms such as "first" and "second" do not indicate a definite difference.

In embodiments of this application, "of (of)", "corresponding (corresponding, relevant)", and "corresponding (corresponding)" may be interchangeably used sometimes. It should be noted that meanings expressed by the terms are consistent when differences are not emphasized.

In embodiments of this application, terms such as "example" and "for example" indicate giving an example, an illustration, or a description. Any embodiment or design scheme described as an "example" in this application should not be explained as being more preferred or having more advantages than another embodiment or design scheme. Exactly, the term "example" is for presenting a concept in a specific manner.

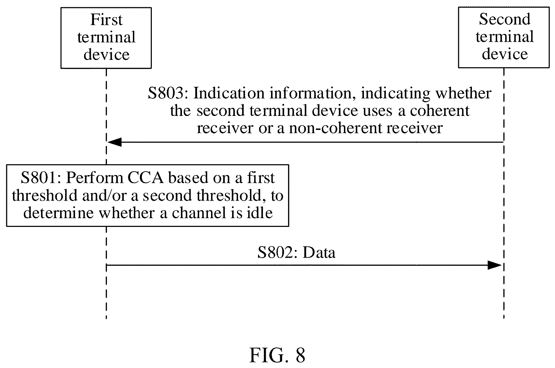

FIG. 8 is a flowchart of a channel access method according to an embodiment of this application. The channel access method provided in this embodiment relates to a first terminal device and a second terminal device. The first terminal device communicates with the second terminal device, and the second terminal device uses a coherent receiver. The first terminal device is a sending device and is a coherent device, and the second terminal device is a receiving device. As shown in FIG. 8, the channel access method provided in this embodiment may include the following steps.

S801: The first terminal device performs CCA based on a first threshold and/or a second threshold, to determine whether a channel is idle. When a terminal device using a non-coherent receiver is receiving data, the CCA is performed based on the first threshold. When no terminal device using a non-coherent receiver is receiving data, the CCA is performed based on the second threshold. The first threshold is less than the second threshold.

For the non-coherent receiver, the coherent receiver, the coherent device, the first threshold, and the second threshold, refer to the foregoing related descriptions in this application. Details are not described herein again.

Specifically, the first terminal device performs the CCA. In the conventional technology shown in FIG. 2, a dashed box also shows a CCA detection process. A difference lies in that: in this step, two CCA thresholds are set, and in a communication scenario in which a coherent receiver and a non-coherent receiver coexist, depending on whether a terminal device using a non-coherent receiver is receiving data, different CCA thresholds are selected to perform the CCA. When a terminal device using a non-coherent receiver is receiving data, the first threshold with a relatively small value is used to perform the CCA, to reduce impact on receiving performance of the non-coherent receiver. When no terminal device using a non-coherent receiver is receiving data, the second threshold with a relatively large value is used to perform the CCA, to increase a capacity of a communication system. In this way, receiving performance of the non-coherent receiver and the capacity of the communication system are well balanced, and system performance of the communication system is improved.

If it is determined that the channel is idle, S802 is performed.

Optionally, CCA algorithms include an energy detection-based CCA algorithm and a preamble symbol detection-based CCA algorithm, where each algorithm corresponds to a first threshold and a second threshold. When manners of determining whether a terminal device using a non-coherent receiver is receiving data are different, or used CCA algorithms are different, the first terminal device may determine, based on the first threshold, whether the channel is idle; the first terminal device may determine, based on the second threshold, whether the channel is idle; or the first terminal device determines, based on the first threshold and the second threshold, whether the channel is idle. The first threshold includes a first threshold corresponding to the energy detection-based CCA algorithm and a first threshold corresponding to the preamble symbol detection-based CCA algorithm. The second threshold includes a second threshold corresponding to the energy detection-based CCA algorithm and a second threshold corresponding to the preamble symbol detection-based CCA algorithm.

For the energy detection-based CCA algorithm and the preamble symbol detection-based CCA algorithm, refer to the foregoing related descriptions in this application. Details are not described herein again.

Optionally, the determining whether a terminal device using a non-coherent receiver is receiving data may be performed before S801. In this way, whether a terminal device using a non-coherent receiver is receiving data is first determined, and then the CCA detection is performed based on different CCA thresholds.

Optionally, the determining whether a terminal device using a non-coherent receiver is receiving data may be performed simultaneously with the CCA performed by the first terminal device in S801. Optionally, in an implementation, the CCA may be performed by using a preamble symbol detection-based CCA algorithm performed based on a first preamble symbol, to determine whether the channel is idle or busy and whether a terminal device using a non-coherent receiver is receiving data.

Optionally, the first terminal device may receive notification information sent by another sending device, where the notification information indicates whether a receiving device corresponding to the another sending device uses a coherent receiver or a non-coherent receiver. Further, the first terminal device determines, based on the notification information, whether a terminal device using a non-coherent receiver is receiving data. Optionally, the notification information may be sent in a broadcast or multicast manner.

Optionally, the notification information is 1 bit. For example, when the notification information is 0, it indicates that the receiving device corresponding to the another sending device uses the coherent receiver; or when the notification information is 1, it indicates that the non-coherent receiver is used. For another example, when the notification information is 1, it indicates that the receiving device corresponding to the another sending device uses the coherent receiver; or when the notification information is 0, it indicates that the non-coherent receiver is used.

Optionally, the first terminal device determines, in the following manner, whether a terminal device using a non-coherent receiver is receiving data:
obtaining first signal energy in first duration based on a first preamble symbol. The first preamble symbol indicates that a terminal device receives data by using a non-coherent receiver.

If the first signal energy is greater than a third threshold, it is determined that a terminal device using a non-coherent receiver is receiving data.

If the first signal energy is less than or equal to a third threshold, it is determined that no terminal device using a non-coherent receiver is receiving data.

For the first preamble symbol, the first duration, the first signal energy, and the third threshold, refer to the foregoing related descriptions in this application. Details are not described herein again.

S802: The first terminal device sends data to the second terminal device.

Optionally, a type of a frame structure sent by the first terminal device may be the frame structure shown in FIG. 6, that is, the existing frame structure in the conventional technology, or may be a second frame structure. The second frame structure includes a second preamble symbol.

For the second preamble symbol and the second frame structure, refer to the foregoing related descriptions in this application. Details are not described herein again.

In an implementation, the first terminal device sends the frame structure shown in FIG. 6 to the second terminal device. Correspondingly, the second terminal device detects a third preamble symbol Sᵢ in a SYNC to implement synchronization, and then determines a start position of a PHR by detecting an SFD, to further decode the PHR and physical layer data. This implementation is the same as that in the conventional technology, and is not changed.

In another implementation, the first terminal device sends the second frame structure to the second terminal device. Correspondingly, the second terminal device receives the second frame structure sent by the first terminal device, determines a position and duration of the second preamble symbol in the second frame structure, and parses the second frame structure. In this implementation, the first terminal device sends the second frame structure, so that another sending device that is to send data can determine, based on the second preamble symbol, that a terminal device using a coherent receiver is receiving data. This helps the another sending device that is to send the data select a corresponding CCA threshold to perform CCA.

Optionally, the second frame structure may be implemented in a first implementation. In other words, the SYNC, the SFD, the PHR, and the physical layer data each include a second preamble symbol. The second terminal device detects a third preamble symbol Sᵢ in the SYNC to implement synchronization. Then, the SFD is detected based on a type of a preamble symbol used in the SFD, to determine a start position of the PHR. In addition, a position and duration of the second preamble symbol S₁ are obtained based on preconfigured related information about the second frame structure, to further decode the PHR and the physical layer data. The type of the preamble symbol used in the SFD may be a third preamble symbol Sᵢ or a first preamble symbol S₀.

Optionally, the second frame structure may be implemented in a second implementation, in other words, the PHR and the physical layer data include a second preamble symbol. The second terminal device detects a third preamble symbol Sᵢ in the SYNC to implement synchronization. Then, the SFD is detected based on a type of a preamble symbol used in the SFD, to determine a start position of the PHR. In addition, a position and duration of the second preamble symbol S₁ are obtained based on preconfigured related information about the second frame structure, to further decode the PHR and the physical layer data. The type of the preamble symbol used in the SFD may be a third preamble symbol Sᵢ or a first preamble symbol S₀.

Optionally, the type of the frame structure sent by the first terminal device may be configured by the first terminal device for the second terminal device, or may be negotiated by the first terminal device and the second terminal device.

It may be learned that the channel access method provided in this embodiment is applied to a scenario in which a sending device corresponding to a terminal device using a coherent receiver is to send data, and a coherent receiver and a non-coherent receiver coexist in a communication environment. The two CCA thresholds of different values are set, and the first terminal device performs the CCA by using different CCA thresholds depending on whether a receiving device using a non-coherent receiver is receiving data in the communication environment. In this way, the receiving performance of the non-coherent receiver and the capacity of the communication system are considered, and the system performance is improved.

Optionally, the channel access method provided in this embodiment may further include the following step.

S803: The second terminal device sends indication information to the first terminal device, where the indication information indicates whether the second terminal device uses a coherent receiver or a non-coherent receiver.

Correspondingly, the first terminal device receives the indication information sent by the second terminal device. The first terminal device may determine, based on the indication information, that a corresponding receiving device uses a coherent receiver. Further, when the first terminal device is to send data, the first terminal device needs to perform the channel access method provided in this embodiment.

Optionally, the indication information is included in a medium access control (medium access control, MAC) header field.

Optionally, the indication information is 1 bit. For example, when the indication information is 0, it indicates that the second terminal device uses the coherent receiver; or when the indication information is 1, it indicates that the second terminal device uses the non-coherent receiver. For another example, when the indication information is 1, it indicates that the second terminal device uses the coherent receiver; or when the indication information is 0, it indicates that the second terminal device uses the non-coherent receiver.

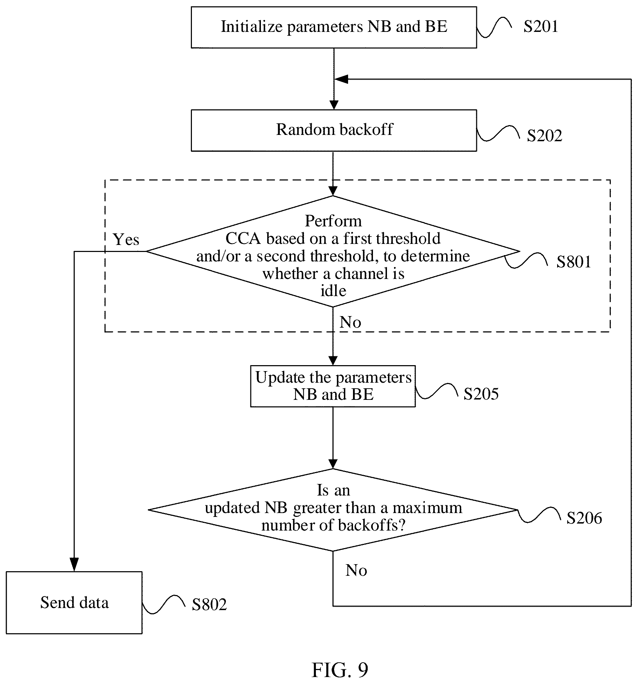

Optionally, as shown in FIG. 9, before S801, the channel access method provided in this embodiment may further include the following steps.

S201: Initialize parameters NB and BE.

S202: Perform random backoff.

After S801, the method may further include:

S205: Update the parameters NB and BE.

S206: Determine whether an updated NB is greater than a maximum number of backoffs.

For S201, S202, S205, and S206, refer to the embodiment shown in FIG. 2. Details are not described herein again.

For S801, the following describes an implementation in which the first terminal device performs the CCA based on the first threshold and/or the second threshold, to determine whether the channel is idle.

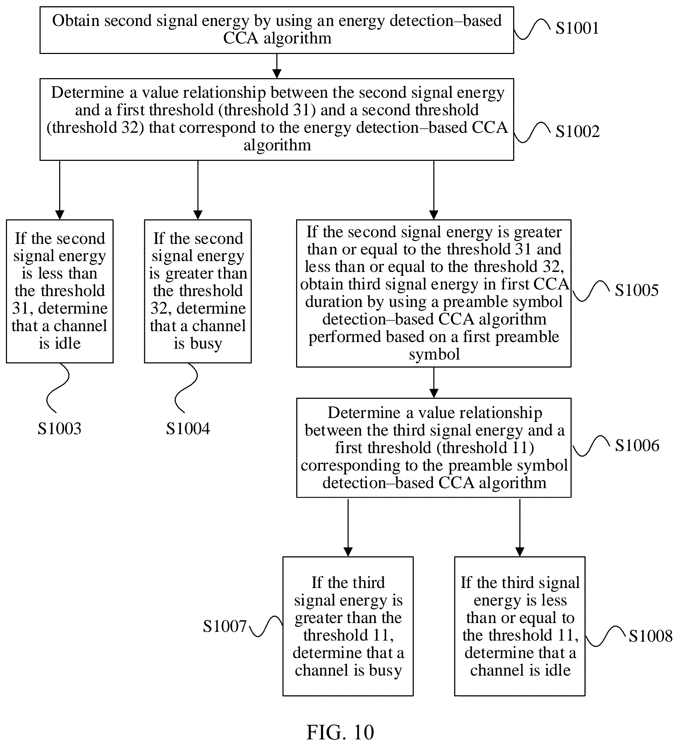

Optionally, in an implementation, as shown in FIG. 10, that the first terminal device performs the CCA based on the first threshold and/or the second threshold, to determine whether the channel is idle may include the following steps.

S1001: Obtain second signal energy by using the energy detection-based CCA algorithm.

The energy detection-based CCA algorithm cannot be used to determine whether a terminal device using a non-coherent receiver is receiving data, or whether a terminal device using a coherent receiver is receiving data.

The energy detection-based CCA algorithm corresponds to the first threshold and the second threshold, which are respectively indicated as a threshold 31 and a threshold 32. A channel interference status may be learned of based on the threshold 31 and the threshold 32, to determine whether the first terminal device can access the channel.

S1002: Determine a value relationship between the second signal energy and the first threshold (threshold 31) and the second threshold (threshold 32) that correspond to the energy detection-based CCA algorithm.

S1003, S1004, or S1005 to S1008 are performed based on a determining result.

S1003: If the second signal energy is less than the first threshold (threshold 31) corresponding to the energy detection-based CCA algorithm, determine that the channel is idle.

If the second signal energy is less than the threshold 31, it indicates that current channel interference is relatively weak, and it is determined that the channel is idle, and the first terminal device can access the channel to send data.

S1004: If the second signal energy is greater than the second threshold (threshold 32) corresponding to the energy detection-based CCA algorithm, determine that the channel is busy.

If the second signal energy is greater than the threshold 32, it indicates that current channel interference is relatively strong, and it is determined that the channel is busy, and the first terminal device cannot access the channel to send data.

S1005: If the second signal energy is greater than or equal to the first threshold (threshold 31) corresponding to the energy detection-based CCA algorithm, and the second signal energy is less than or equal to the second threshold (threshold 32) corresponding to the energy detection-based CCA algorithm, obtain third signal energy in first CCA duration by using the preamble symbol detection-based CCA algorithm performed based on the first preamble symbol.

If the second signal energy is between the threshold 31 and the threshold 32, the current channel has specific interference. This may affect receiving of data by a terminal device using a non-coherent receiver. Therefore, whether a terminal device using a non-coherent receiver is receiving data needs to be further determined, to further determine whether the channel is idle or busy.

S1006: Determine a value relationship between the third signal energy and the first threshold (threshold 11) corresponding to the preamble symbol detection-based CCA algorithm performed based on the first preamble symbol.

S1007 or S1008 is performed based on a determining result.

S1007: If the third signal energy is greater than the first threshold (threshold 11) corresponding to the preamble symbol detection-based CCA algorithm performed based on the first preamble symbol, determine that the channel is busy.

S1008: If the third signal energy is less than or equal to the first threshold (threshold 11) corresponding to the preamble symbol detection-based CCA algorithm performed based on the first preamble symbol, determine that the channel is idle.

Specifically, the dedicated preamble symbol detection-based CCA algorithm performed based on the first preamble symbol is used to determine whether a terminal device using a non-coherent receiver is receiving data and whether the channel is idle. If a terminal device using a non-coherent receiver is receiving data, it is determined that the channel is busy; or if no terminal device using a non-coherent receiver is receiving data, it is determined that the channel is idle.

It may be learned that, in this implementation, the CCA is first performed by using the energy detection-based CCA algorithm, and a status of an idle channel with relatively weak interference and a status of a busy channel with relatively strong interference are determined by using two specified CCA thresholds (the threshold 31 and the threshold 32). The energy detection-based CCA algorithm is simple to implement and has low computing complexity. When whether the channel is idle cannot be determined by using the energy detection-based CCA algorithm, the dedicated preamble symbol detection-based CCA algorithm performed based on the first preamble symbol continues to be used, and whether a terminal device using a non-coherent receiver is receiving data and whether the channel is idle are determined based on the specified CCA threshold (threshold 11) with a relatively small value. If a terminal device using a non-coherent receiver is receiving data, it is determined that the channel is busy. This avoids impact on the non-coherent receiver that is receiving the data. If no terminal device using a non-coherent receiver is receiving data, it is determined that the channel is idle, and the first terminal device accesses the channel to send data. This increases the system capacity.

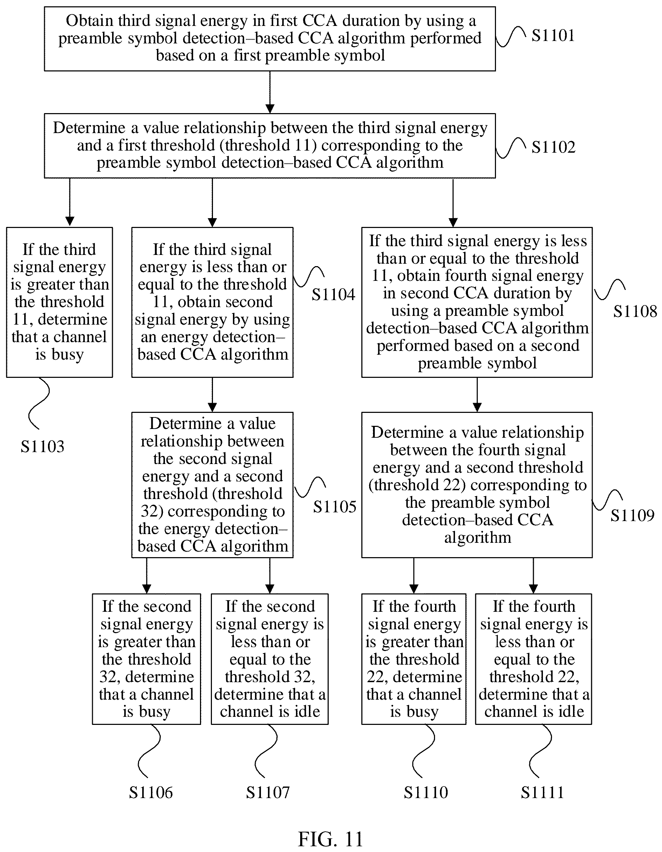

Optionally, in another implementation, as shown in FIG. 11, that the first terminal device performs the CCA based on the first threshold and/or the second threshold, to determine whether the channel is idle may include the following steps.

S1101: Obtain third signal energy in first CCA duration by using the preamble symbol detection-based CCA algorithm performed based on the first preamble symbol.

The dedicated preamble symbol detection-based CCA algorithm performed based on the first preamble symbol is used to determine whether a terminal device using a non-coherent receiver is receiving data and whether the channel is idle or busy.

S1102: Determine a value relationship between the third signal energy and the first threshold (threshold 11) corresponding to the preamble symbol detection-based CCA algorithm performed based on the first preamble symbol.

S1103, S1104 to S1107, or S1108 to S1111 are performed based on a determining result.

S1103: If the third signal energy is greater than the first threshold (threshold 11) corresponding to the preamble symbol detection-based CCA algorithm performed based on the first preamble symbol, determine that the channel is busy.

If the third signal energy is greater than the threshold 11, it indicates that a terminal device using a non-coherent receiver is receiving data, and it is determined that the channel is busy.

S1104: If the third signal energy is less than or equal to the first threshold (threshold 11) corresponding to the preamble symbol detection-based CCA algorithm performed based on the first preamble symbol, obtain second signal energy by using the energy detection-based CCA algorithm.

S1105: Determine a value relationship between the second signal energy and the second threshold (threshold 32) corresponding to the energy detection-based CCA algorithm.

S1106: If the second signal energy is greater than the second threshold (threshold 32) corresponding to the energy detection-based CCA algorithm, determine that the channel is busy.

S1107: If the second signal energy is less than or equal to the second threshold (threshold 32) corresponding to the energy detection-based CCA algorithm, determine that the channel is idle.

Specifically, if the third signal energy is less than or equal to the threshold 11, it indicates that no terminal device using a non-coherent receiver is receiving data, that is, no non-coherent receiver needs to be avoided. Whether a coherent receiver needs to be avoided needs to be further determined. In an implementation, the CCA is continued to be performed by using the energy detection-based CCA algorithm and the corresponding CCA threshold (threshold 32) with a relatively large value. If the second signal energy is greater than the threshold 32, it indicates that current channel interference is relatively strong, a coherent receiver needs to be avoided, it is determined that the channel is busy, and the first terminal device cannot access the channel to send data. This avoids impact on receiving performance of the coherent receiver due to a further increase of channel interference. If the second signal energy is less than or equal to the threshold 32, it indicates that current channel interference is relatively weak, no coherent receiver needs to be avoided, it is determined that the channel is idle, and the first terminal device can access the channel to send data. This improves the system capacity.

S1108: If the third signal energy is less than or equal to the first threshold (threshold 11) corresponding to the preamble symbol detection-based CCA algorithm performed based on the first preamble symbol, obtain fourth signal energy in second CCA duration by using a preamble symbol detection-based CCA algorithm performed based on a second preamble symbol.

S1109: Determine a value relationship between the fourth signal energy and a second threshold (threshold 22) corresponding to the preamble symbol detection-based CCA algorithm performed based on the second preamble symbol.

S1110 or S1111 is performed based on a determining result.

S1110: If the fourth signal energy is greater than the second threshold (threshold 22) corresponding to the preamble symbol detection-based CCA algorithm performed based on the second preamble symbol, determine that the channel is busy.

S1111: If the fourth signal energy is less than or equal to the second threshold (threshold 22) corresponding to the preamble symbol detection-based CCA algorithm performed based on the second preamble symbol, determine that the channel is idle.

Specifically, if the third signal energy is less than or equal to the threshold 11, it indicates that no terminal device using a non-coherent receiver is receiving data, that is, no non-coherent receiver needs to be avoided. Whether a coherent receiver needs to be avoided needs to be further determined. In another implementation, the CCA is continued to be performed by using a dedicated preamble symbol detection-based CCA algorithm performed based on a second preamble symbol, to determine whether a terminal device using a coherent receiver is receiving data and whether the channel is idle or busy. A CCA threshold (threshold 22) with a relatively large value is used. If the fourth signal energy is greater than the threshold 22, it indicates that a coherent receiver needs to be avoided, it is determined that the channel is busy, and the first terminal device cannot access the channel to send data. This avoids impact on receiving performance of the coherent receiver due to a further increase of channel interference. If the fourth signal energy is less than or equal to the threshold 22, it indicates that no coherent receiver needs to be avoided, it is determined that the channel is idle, and the first terminal device can access the channel to send data. This improves the system capacity.

It may be learned that, in this implementation, the CCA is first performed by using the dedicated preamble symbol detection-based CCA algorithm performed based on the first preamble symbol, to improve efficiency of identifying whether a terminal device using a non-coherent receiver is receiving data. When it is determined that no non-coherent device needs to be avoided, the energy detection-based CCA algorithm continues to be used, or the dedicated preamble symbol detection-based CCA algorithm performed based on the second preamble symbol continues to be used to perform the CCA, to determine whether a coherent receiver needs to be avoided. In a scenario in which a coherent receiver and a non-coherent receiver coexist, receiving performance of the non-coherent receiver and the capacity of the communication system are considered, and the system performance is improved.

The first CCA duration is related to a time length of a first preamble symbol and a time interval at which the first preamble symbol is inserted into a first frame structure. For details, refer to the foregoing related descriptions of the first frame structure in this application. Details are not described herein again.

The second CCA duration is related to a time length of a second preamble symbol and a time interval at which the second preamble symbol is inserted into a second frame structure. A principle of the second CCA duration is similar to that of the first CCA duration. For details, refer to the foregoing related descriptions of the first frame structure in this application. Details are not described herein again.

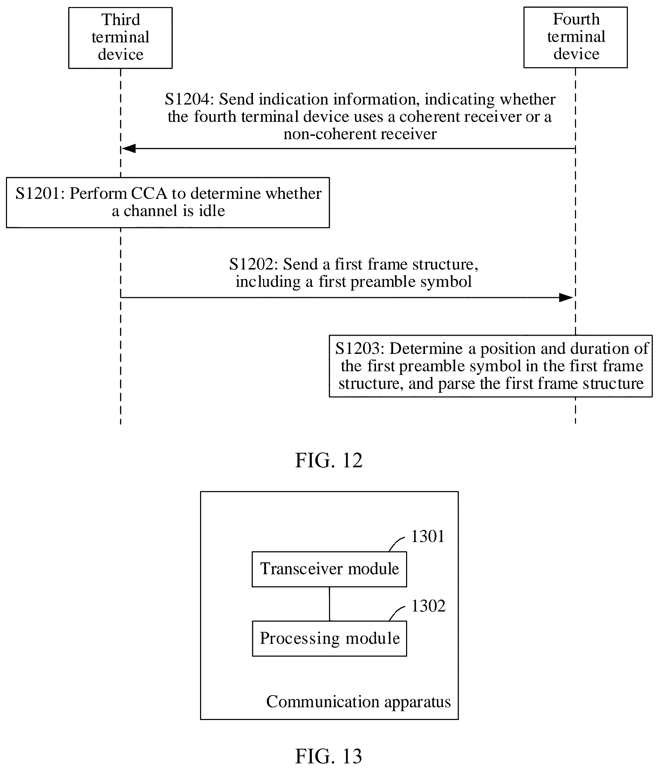

FIG. 12 is still another flowchart of a channel access method according to an embodiment of this application. The channel access method provided in this embodiment relates to a third terminal device and a fourth terminal device. The third terminal device communicates with the fourth terminal device, and the third terminal device uses a non-coherent receiver. The third terminal device is a sending device and a non-coherent device, and the fourth terminal device is a receiving device. As shown in FIG. 12, the channel access method provided in this embodiment may include the following steps.

S1201: The third terminal device performs CCA to determine whether a channel is idle.

A CCA algorithm in a conventional technology may be used for the CCA detection. For example, refer to FIG. 2. Details are not described herein again.

If it is determined that the channel is idle, S1202 is performed.

S1202: The third terminal device sends a first frame structure to the fourth terminal device, where the first frame structure includes a first preamble symbol.

For the first frame structure and the first preamble symbol, refer to the foregoing related descriptions in this application. Details are not described herein again.

Correspondingly, the fourth terminal device receives the first frame structure sent by the third terminal device.

S1203: The fourth terminal device determines a position and duration of the first preamble symbol in the first frame structure, and parses the first frame structure.

It may be learned that the channel access method provided in this embodiment is applied to a scenario in which a sending device corresponding to a terminal device using a non-coherent receiver is to send data, and a method for performing the CCA by the third terminal device remains unchanged. After performing the CCA to determine that the channel is idle, the third terminal device needs to send the first frame structure. The first frame structure includes the first preamble symbol, so that another sending device that is to send data can determine, based on the first preamble symbol, that a receiving device using a non-coherent receiver in a current environment is receiving data. If a receiving device corresponding to the another sending device that is to send the data uses a coherent receiver, the CCA may be performed based on different CCA thresholds. In a scenario in which a coherent receiver and a non-coherent receiver coexist, receiving performance of the non-coherent receiver and a capacity of a communication system are considered, and system performance is improved.

Optionally, the channel access method provided in this embodiment may further include the following step.

S1204: The fourth terminal device sends indication information to the third terminal device, where the indication information indicates whether the fourth terminal device uses a coherent receiver or a non-coherent receiver.

Correspondingly, the third terminal device receives the indication information sent by the fourth terminal device. The third terminal device may determine, based on the indication information, that a corresponding receiving device uses a coherent receiver. Further, when the third terminal device is to send data, the third terminal device sends the first frame structure.

Optionally, before S1201, the channel access method provided in this embodiment may further include:

S201: Initialize parameters NB and BE.

S202: Perform random backoff.

After S1201, the method may further include:

S205: Update the parameters NB and BE.

S206: Determine whether an updated NB is greater than a maximum number of backoffs.

For S201, S202, S205, and S206, refer to the embodiment shown in FIG. 2. Details are not described herein again.

The methods provided in embodiments of this application are described from a perspective of interaction between a terminal device and different terminal devices in the foregoing embodiments provided in this application. To implement the functions in the methods provided in embodiments of this application, the terminal device may include a hardware structure and/or a software module, and implement the foregoing functions in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

FIG. 13 is a diagram of a structure of a possible communication apparatus according to an embodiment of this application. The communication apparatus can implement functions of the first terminal device, the second terminal device, the third terminal device, or the fourth terminal device in the foregoing method embodiments. Therefore, beneficial effects of the foregoing method embodiments can also be implemented. In this embodiment of this application, the communication apparatus may be the terminal device 101 shown in FIG. 1, or may be a module (for example, a chip) used in a terminal device.

As shown in FIG. 13, the communication apparatus includes a transceiver module 1301 and a processing module 1302. The transceiver module 1301 is configured to communicate with another device, and the processing module 1302 is configured to implement another processing step. The communication apparatus may be configured to implement functions of the terminal devices in the method embodiments shown in the foregoing embodiments.

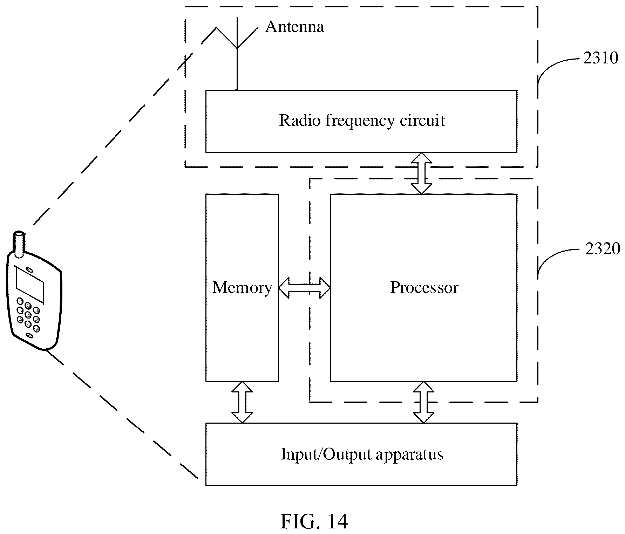

When the communication apparatus is a terminal device, FIG. 14 is a simplified diagram of a structure of the terminal device. For ease of understanding and convenience of graphical representation, in FIG. 14, a mobile phone is used as an example of the terminal device. As shown in FIG. 14, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user, and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 14 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device (the transceiver unit may be one functional unit, and the functional unit can implement a sending function and a receiving function; or the transceiver unit may include two functional units: a receiving unit that can implement a receiving function and a sending unit that can implement a sending function), and the processor having a processing function may be considered as a processing unit of the terminal device. As shown in FIG. 14, the terminal device includes a transceiver unit 2310 and a processing unit 2320. The transceiver unit may also be referred to as a transceiver, a transceiver machine, a transceiver apparatus, or the like. The processing unit may also be referred to as a processor, a processing board, a processing module, a processing apparatus, or the like. Optionally, a component for implementing the receiving function in the transceiver unit 2310 may be considered as a receiving unit, and a component for implementing the sending function in the transceiver unit 2310 may be considered as a sending unit. In other words, the transceiver unit 2310 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 2310 is configured to perform a sending operation and a receiving operation of the terminal device in the foregoing method embodiments, and the processing unit 2320 is configured to perform an operation other than the receiving and sending operations on the terminal device in the foregoing method embodiments.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application provides a communication system. The communication system may include a terminal device in the foregoing embodiments, for example, the first terminal device, the second terminal device, the third terminal device, and the fourth terminal device. Optionally, the terminal device in the communication system may perform the method provided in the method embodiments of this application.

An embodiment of this application further provides a computer-readable storage medium. The computer-readable storage medium stores a computer program. When the computer program is executed by a computer, the computer may implement a procedure related to the terminal device in any one of the foregoing method embodiments.

An embodiment of this application further provides a computer program product. The computer program product is configured to store a computer program. When the computer program is executed by a computer, the computer may implement a procedure related to the terminal device in any one of the foregoing method embodiments.

An embodiment of this application further provides a chip or a chip system. The chip may include a processor. The processor may be configured to invoke a program or instructions in a memory, to perform a procedure related to the terminal device in any one of the foregoing method embodiments. The chip system may include the chip, and may further include another component such as a memory or a transceiver.

An embodiment of this application further provides a circuit. The circuit may be coupled to a memory, and may be configured to perform a procedure related to the terminal device in any one of the foregoing method embodiments.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programable gate array, FPGA) or another programmable logic device, a discrete gate, a transistor logic device, a discrete hardware component, or the like. The general-purpose processor may be a microprocessor, or the processor may be any conventional processor or the like.

It should be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification is intended to include but not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, modules and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In several embodiments provided in this application, it should be understood that the disclosed channel access method and apparatus may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules are integrated into one module.

When the functions are implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or the like) to perform all or some of the steps of the methods in embodiments of this application. The computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk drive, or another optical disc storage or a disk storage medium, or another magnetic storage device, or any other medium that can carry or store expected program code in a form of an instruction or a data structure and can be accessed by a computer.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A channel access method, applied to a first terminal device, wherein the first terminal device communicates with a second terminal device, the second terminal device uses a coherent receiver, and the method comprises:
performing clear channel assessment, CCA, based on a first threshold and/or a second threshold, to determine whether a channel is idle, wherein when a terminal device using a non-coherent receiver is receiving data, the CCA is performed based on the first threshold, or when no terminal device using a non-coherent receiver is receiving data, the CCA is performed based on the second threshold; and the first threshold is less than the second threshold; and
if it is determined that the channel is idle, sending data to the second terminal device.

2. The method according to claim 1, wherein whether a terminal device using a non-coherent receiver is receiving data is determined in the following manner:
obtaining first signal energy in first duration based on a first preamble symbol, wherein the first preamble symbol indicates that a terminal device receives data by using a non-coherent receiver; and
if the first signal energy is greater than a third threshold, determining that a terminal device using a non-coherent receiver is receiving data; or
if the first signal energy is less than or equal to a third threshold, determining that no terminal device using a non-coherent receiver is receiving data.

3. The method according to claim 1 or 2, wherein performing the clear channel assessment CCA based on the first threshold and/or the second threshold comprises:
obtaining second signal energy by using an energy detection-based CCA algorithm;
if the second signal energy is greater than or equal to a first threshold corresponding to the energy detection-based CCA algorithm, and the second signal energy is less than or equal to a second threshold corresponding to the energy detection-based CCA algorithm, obtaining third signal energy in first CCA duration by using a preamble symbol detection-based CCA algorithm performed based on a first preamble symbol, wherein the first preamble symbol indicates that a terminal device receives data by using a non-coherent receiver; and
if the third signal energy is greater than a first threshold corresponding to the preamble symbol detection-based CCA algorithm, determining that the channel is busy; or
if the third signal energy is less than or equal to a first threshold corresponding to the preamble symbol detection-based CCA algorithm, determining that the channel is idle.

4. The method according to claim 3, wherein the method further comprises:
if the second signal energy is less than the first threshold corresponding to the energy detection-based CCA algorithm, determining that the channel is idle; or
if the second signal energy is greater than the second threshold corresponding to the energy detection-based CCA algorithm, determining that the channel is busy.

5. The method according to claim 1 or 2, wherein performing the clear channel assessment CCA based on the first threshold and/or the second threshold comprises:
obtaining third signal energy in first CCA duration by using a preamble symbol detection-based CCA algorithm performed based on a first preamble symbol, wherein the first preamble symbol indicates that a terminal device receives data by using a non-coherent receiver; and
if the third signal energy is greater than a first threshold corresponding to the preamble symbol detection-based CCA algorithm, determining that the channel is busy.

6. The method according to claim 5, wherein if the third signal energy is less than or equal to the first threshold corresponding to the preamble symbol detection-based CCA algorithm, the method further comprises:
obtaining second signal energy by using an energy detection-based CCA algorithm; and
if the second signal energy is greater than a second threshold corresponding to the energy detection-based CCA algorithm, determining that the channel is busy; or
if the second signal energy is less than or equal to a second threshold corresponding to the energy detection-based CCA algorithm, determining that the channel is idle.

7. The method according to claim 5, wherein if the third signal energy is less than or equal to the first threshold corresponding to the preamble symbol detection-based CCA algorithm, the method further comprises:
obtaining fourth signal energy in second CCA duration by using a preamble symbol detection-based CCA algorithm performed based on a second preamble symbol, wherein the second preamble symbol indicates that a terminal device receives data by using a coherent receiver; and
if the fourth signal energy is greater than a second threshold corresponding to the preamble symbol detection-based CCA algorithm, determining that the channel is busy; or
if the fourth signal energy is less than or equal to a second threshold corresponding to the preamble symbol detection-based CCA algorithm, determining that the channel is idle.

8. The method according to any one of claims 3, 4, and 6, wherein the first threshold corresponding to the energy detection-based CCA algorithm and the first threshold corresponding to the preamble symbol detection-based CCA algorithm have different values.

9. The method according to any one of claims 3 to 8, wherein a first frame structure comprises a physical header and physical layer data, M first preamble symbols are periodically inserted into the physical header and the physical layer data based on a time interval T1, M is a positive integer, and the first frame structure is sent by a terminal device that sends data and that corresponds to a terminal device receiving data by using a non-coherent receiver.

10. The method according to claim 9, wherein the first frame structure further comprises a synchronization field, the synchronization field comprises a third preamble symbol, the third preamble symbol is used for synchronization, N first preamble symbols are further periodically inserted into the synchronization field based on a time interval T2, and N is a positive integer.

11. The method according to claim 10, wherein the first frame structure further comprises a start-of-frame delimiter field; and
the start-of-frame delimiter field is spread by using the third preamble symbol, and the N first preamble symbols are further periodically inserted into the start-of-frame delimiter field based on the time interval T2; or the start-of-frame delimiter field is generated based on the first preamble symbol and a spreading code.

12. The method according to claim 10 or 11, wherein the first CCA duration is T5+j*T0, j is a positive integer, 1≤j≤max(M, N), max() indicates taking a maximum value, T0 is a time length of the first preamble symbol, and T5 is a largest value in the time interval T1 and a plurality of preset time intervals T2.

13. The method according to claim 9, wherein the first CCA duration is at least the time interval T1+j*T0, j is a positive integer, 1≤j≤M, and T0 is a time length of the first preamble symbol.

14. The method according to any one of claims 2 to 13, wherein a cross-correlation value between a preamble code sequence used for the first preamble symbol and a preamble code sequence used for a third preamble symbol is less than a preset value, and the third preamble symbol is used for synchronization.

15. The method according to claim 7, wherein the second CCA duration is related to a time length of the second preamble symbol and a time interval at which the second preamble symbol is inserted into a second frame structure, and the second frame structure is sent by a terminal device that sends data and that corresponds to a terminal device receiving data by using a coherent receiver.

16. The method according to any one of claims 1 to 15, wherein sending the data to the second terminal device comprises:
sending a second frame structure to the second terminal device, wherein the second frame structure comprises a second preamble symbol, and the second preamble symbol indicates that the second terminal device uses a coherent receiver.

17. The method according to claim 15 or 16, wherein a cross-correlation value between a preamble code sequence used for the second preamble symbol and a preamble code sequence used for a first preamble symbol, and a cross-correlation value between the preamble code sequence used for the second preamble symbol and a preamble code sequence used for a third preamble symbol are both less than a preset value, the first preamble symbol indicates that a terminal device uses a non-coherent receiver, and the third preamble symbol is used for synchronization.

18. The method according to any one of claims 1 to 17, wherein the method further comprises:
receiving indication information sent by the second terminal device, wherein the indication information indicates whether the second terminal device uses a coherent receiver or a non-coherent receiver.

19. A channel access method, applied to a third terminal device, wherein the third terminal device communicates with a fourth terminal device, the fourth terminal device uses a non-coherent receiver, and the method comprises:
performing clear channel assessment CCA to determine whether a channel is idle; and
if it is determined that the channel is idle, sending a first frame structure to the fourth terminal device, wherein the first frame structure comprises a first preamble symbol, and the first preamble symbol indicates that the fourth terminal device uses the non-coherent receiver.

20. The method according to claim 19, wherein the method further comprises:
receiving indication information sent by the fourth terminal device, wherein the indication information indicates whether the fourth terminal device uses a coherent receiver or a non-coherent receiver.

21. A channel access method, applied to a fourth terminal device, wherein the fourth terminal device communicates with a third terminal device, the fourth terminal device uses a non-coherent receiver, and the method comprises:
receiving a first frame structure sent by the third terminal device, wherein the first frame structure comprises a first preamble symbol, and the first preamble symbol indicates that the fourth terminal device uses the non-coherent receiver; and
determining a position and duration of the first preamble symbol in the first frame structure, and parsing the first frame structure.

22. The method according to claim 21, wherein the method further comprises:
sending indication information to the third terminal device, wherein the indication information indicates whether the fourth terminal device uses a coherent receiver or a non-coherent receiver.

23. The method according to any one of claims 19 to 22, wherein the first frame structure comprises a physical header and physical layer data, and the physical header and the physical layer data comprise the first preamble symbol.

24. The method according to claim 23, wherein M first preamble symbols are periodically inserted into the physical header and the physical layer data based on a time interval T1, and M is a positive integer.

25. The method according to claim 23 or 24, wherein the first frame structure further comprises a synchronization field and a start-of-frame delimiter field, and the synchronization field and the start-of-frame delimiter field both comprise the first preamble symbol.

26. The method according to claim 25, wherein the synchronization field further comprises a third preamble symbol, the third preamble symbol is used for synchronization, N first preamble symbols are further periodically inserted into the synchronization field based on a time interval T2, and N is a positive integer.

27. The method according to claim 26, wherein the start-of-frame delimiter field is spread by using the third preamble symbol, and the N first preamble symbols are further periodically inserted into the start-of-frame delimiter field based on the time interval T2.

28. The method according to claim 26 or 27, wherein the time interval T2 is related to a time length of the third preamble symbol or a time length of a preamble code sequence used for the third preamble symbol.

29. The method according to claim 26 or 27, wherein the N first preamble symbols are located after an end position of a former third preamble symbol and before a start position of a latter third preamble symbol in two adjacent third preamble symbols.

30. The method according to claim 26, wherein the start-of-frame delimiter field is generated based on the first preamble symbol and a spreading code.

31. The method according to claim 23 or 24, wherein the first frame structure further comprises a synchronization field and a start-of-frame delimiter field;
the synchronization field comprises a third preamble symbol, and the third preamble symbol is used for synchronization; and
the start-of-frame delimiter field is generated based on the third preamble symbol and a spreading code, or the start-of-frame delimiter field is generated based on the first preamble symbol and a spreading code.

32. The method according to any one of claims 21 to 31, wherein a cross-correlation value between a preamble code sequence used for the first preamble symbol and a preamble code sequence used for a third preamble symbol is less than a preset value, and the third preamble symbol is used for synchronization.

33. A communication apparatus, comprising a module configured to perform the method according to any one of claims 1 to 18 or claims 19 to 32.

34. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 18 or claims 19 to 32 through a logic circuit or by executing code instructions.

35. A computer-readable storage medium, wherein the computer-readable storage medium stores a computer program; and when the computer program is run, the method according to any one of claims 1 to 18 or claims 19 to 32 is implemented.

36. A computer program product, wherein the computer program product comprises computer program code; and when the computer program code is run, the method according to any one of claims 1 to 18 or claims 19 to 32 is implemented.
